(19) Europäisches Patentamt
European Patent Office
Office européen des brevets

(11) EP 4 041 815 B1

(12) EUROPEAN PATENT SPECIFICATION

(45) Date of publication and mention of the grant of the patent:
**15.11.2023 Bulletin 2023/46**

(21) Application number: **20799826.1**

(22) Date of filing: **12.10.2020**

(51) International Patent Classification (IPC):
***C08K 5/20*** *(2006.01)* ***C08L 77/02*** *(2006.01)*
***C08L 77/06*** *(2006.01)* ***C08K 5/00*** *(2006.01)*
***C08G 63/685*** *(2006.01)*

(52) Cooperative Patent Classification (CPC):
(C-Sets available)
**C08K 5/20; C08G 63/6852;** C08K 5/0016 (Cont.)

(86) International application number:
**PCT/IB2020/059565**

(87) International publication number:
**WO 2021/070157 (15.04.2021 Gazette 2021/15)**

# (54) USE OF AMIDES AS PLASTICIZERS FOR POLYAMIDES

VERWENDUNG VON AMIDEN ALS WEICHMACHER FÜR POLYAMIDE

UTILISATION D'AMIDES COMME PLASTIFIANTS DE POLYAMIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2019 IT 201900018551**

(43) Date of publication of application:
**17.08.2022 Bulletin 2022/33**

(73) Proprietor: **Nachmann S.r.l.**
**20129 Milano (MI) (IT)**

(72) Inventors:
- **FARINA, Hermes**
  **24010 Sorisole (BG) (IT)**
- **ORTENZI, Marco Aldo**
  **20124 Milano (MI) (IT)**
- **ANTENUCCI, Stefano**
  **22063 Cantù (CO) (IT)**
- **RAMPAZZO, Riccardo**
  **20017 Rho (MI) (IT)**
- **SILVANI, Alessandra**
  **20122 Milano (MI) (IT)**
- **CAMAZZOLA, Stefano**
  **20020 Lainate (MI) (IT)**
- **GAZZOTTI, Stefano**
  **20064 Gorgonzola (MI) (IT)**
- **GIROLA, Italo**
  **20129 Milano (MI) (IT)**
- **COTILLI, Francesco**
  **20129 Milano (MI) (IT)**

(74) Representative: **Gislon, Gabriele**
**Marietti, Gislon e Trupiano S.r.l.**
**Via Larga, 16**
**20122 Milano (IT)**

(56) References cited:
**DE-C- 889 071**
**FR-A- 1 446 543**
**GB-A- 1 052 141**
**US-A- 3 542 720**
**US-A- 4 749 736**
**US-A- 5 071 896**
**US-A1- 2018 318 470**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/20, C08L 77/00;**
**C08K 5/20, C08L 77/02**

## Description

### Abstract of the Invention

Subject-matter of the present invention is the use of a polyester polymer as plasticizer for polyamides, a method for plasticizing the polyamides and the so-manufactured polyamides.

### Technical Field

The addition to polymers, in particular but without limitation to polyamides, of substances called plasticizers, is known.

Plasticizers are compounds or mixtures of chemicals, also in the polymer form, used as additives of another polymer material to make it softer and more flexible. Plasticizers lay between the polymer chains and must be as compatible as possible with the polymer material to which they are added to make it softer and more flexible; they must not excessively migrate on the material surface, since this would lead to a loss of effectiveness of the plasticizing power of the added additive over time, in addition to cause an unaesthetic surface effect of the finished product made of the plasticized material. A plasticizer modifies the mechanical properties of the material to which it is added and typically leads to a reduction of the moduli, such as for example the elastic modulus, the traction modulus, the flexural modulus, the compression modulus; generally it leads to an increase of the material flexibility, which results to an increase, e.g., of the elongation at break and leads to a reduction of the glass transition temperature and/or the melting temperature, where present, of the plasticized material with respect to the unplasticized material.

To date the most used plasticizer for polyamides, in particular for polyamide 6 (Nylon 6), is N-butylbenzenesulfonamide (NBBSA) or sulfonamide products similar to this molecule. US 2018/318470 discloses plasticized nylon with amide (di or tetra ) based on fatty acid and di or triamine (see claim 1) (or hexaamine) for making medical devices. In § 54-56 the reaction of an hydroxycarboxylic acid (w-hydroxy) in form of a lactone will lead to an amide with an hydroxy amide, the reaction leading to the opening of the lactone cycle.

Even having good plasticizing activity, this molecule has several drawbacks, among which its toxicity and ability of producing irritating vapors at the temperature of the polyamide processing.

Several alternative solutions have been tried but without success, not allowing to obtain molecules which combine good plasticizing ability and low or no migration.

There is therefore the need of finding novel molecules capable of plasticizing polyamides which overcome the above stated drawbacks.

### Objects of the invention

It is an object of the invention to provide a novel use of a class of molecules as plasticizers.

It is a further object of the invention to provide a method for plasticizing polymers, in particular polyamides using said class of molecules as well as the so-plasticized polyamides.

This and other objects are achieved by means of the invention as herein described and claimed.

### Brief description of the Figures

Figures 1 to 7 show the FT-IR spectra of the polymers of Examples 2, 3, 6, 7,9, 13 and 14, respectively. In all the FT-IR spectra it is evident the presence of peaks at about $1645cm^{-1}$ and at about $3300cm^{-1}$ which are characteristic respectively of the C=O bond and the N-H bond of the amide group and, at the same time, it is evident the presence of the peak at about $1730cm^{-1}$ characteristic of the ester C=O bond.

### Description of the invention

According to one of its aspects, a subject-matter of the invention is the use of a polyester polymer containing at least one amide group constituted by the bond between:

- type (a) reagents: compounds with at least one primary or secondary amine functional group and optionally one or more hydroxy groups or a derivative of said one or more hydroxy groups,
- type (b) ragents: aliphatic hydroxyacid monomers having from 2 to 32 carbon atoms containing at least one carboxylic group and at least one hydroxy group, or derivatives thereof,

said polymer having polyester chains bonded to the at least one primary or secondary amine functional group of the

type (a) reagent compound through said amide bond, and said chains having a number-average degree of polymerization from 2 to 10,

as a plasticizer for polyamides.

According to the present invention, "polyester polymer containing at least one amide group" means that said polymer contains at least one primary, secondary or tertiary carboxamide group, i.e. at least one C(=O)-N functional group and that, in case it contains two or more C(=O)-N functional groups, such groups do not derive from the reaction between monomers capable of bonding with each other, thus leading to the increase of molecular weight, by means of several reaction steps with the formation, for each reaction step, of an amide bond, but derive from the reaction of compounds (a) which cannot be considered as "monomers" capable of providing polyamides under the considered conditions.

According to a preferred embodiment, said polyester polymer containing at least one amide group contains one to eleven carboxamide groups, as defined above, preferably 1 to 5.

According to a preferred embodiment said aliphatic hydroxyacid monomers, or derivatives thereof, have 2 to 10 carbon atoms, preferably 2 to 8, still more preferably 2 to 6.

In compounds (a) and in monomers (b) the hydroxy groups can be in the form of their derivatives, e.g. in the form of derivatives converting into hydroxy groups in the reaction environment, e.g. in the form of ester groups.

The at least one carboxylic group of monomer (b) can be also in the form of any derivative thereof capable of reacting with the at least one amine group of compound (a) to form the amide group, such as for example an acyl halide, such as for example an acyl chloride or an ester.

A carboxylic group and a hydroxy group of monomer (b) can be also in the form of their lactone derivative.

It will be understood that type (b) reagents, reacting with each other, form the polyester polymer chains of the invention and that the type (a) reagents, definition including ammonia as well, react with the carboxylic groups of type (b) reagents, de facto acting as tuners of the average length of the polyester chains.

The carboxylic groups of type (b) reagents can also react with the hydroxy groups optionally present on type (a) reagents to provide further ester bonds.

It is clear to the one skilled in the field that for the formation of the polyester polymer containing at least one amide group of the invention it is possible to react not only aliphatic hydroxyacid monomers, which by reacting with each other lead to the formation of the polyester polymer chains, but also directly oligomers thereof.

In the present invention the term "polyester polymer" means both a homopolymer, when only one monomer (b) is reacted, and a copolymer when two or more different monomers (b) are reacted.

According to the present invention, "plasticizer" means a molecule, or a molecule mixture which, once incorporated into the polyamides, modifies their characteristics such as for example by reducing the traction modulus, the flexural modulus and the compression modulus, and by increasing the elongation at break. According to the present invention, "polyamide" means a polymer characterized by several (C(=O)-N) carboxamide bonds derived from the reaction between monomers capable of bonding with each other, thus leading to the increase of molecular weight of the polymer chains by several reaction steps with the formation, indeed, for each reaction step of an amide bond. Among this class of polymers there are the aliphatic polyamides (nylon, e.g. Nylon 6, Nylon 46, Nylon 66, Nylon 610; Nylon 1010, Nylon 612, Nylon 1012, Nylon 11, Nylon 12), the aromatic polyamides, aramids (e.g. Kevlar), and the semi-aromatic polyamides (e.g. the 6T polyamide, Nylon 66/6T, Nylon 610/6T, Nylon 612/6T); the term "polyamide" includes herein also mixtures of polyamides and copolymers of said polyamides.

Preferred polyamides for the use according to the invention are selected from polyamide 6, polyamide 6,6 polyamide 11, polyamide 12, polyamide 6,10, mixtures and copolymers thereof.

According to a preferred embodiment, subject-matter of the invention is the use of a polymer obtained from the reaction between:

- at least one compound (a) selected from
  - ammonia and
  - a compound containing at least one primary or secondary amine group and optionally containing one or more hydroxy groups, and
- at least one aliphatic hydroxyacid monomer (b), or a derivative thereof, containing at least one carboxylic group or a derivative thereof and at least one hydroxy group or a derivative thereof,
  provided that:
- if compound (a) has two or more functional groups selected from primary amine groups and secondary amine groups, and/or contains one or more hydroxy groups, then monomer (b) has only one carboxylic functional group,
- if compound (a) has only one amine group, then monomer (b) can have one or more carboxylic functional groups, and
- the ratio between the moles of (b) and the average functionality of (a) in terms of primary, secondary amine groups,

and optionally of hydroxy groups, ranges from 10/1 to 2/1,

as a plasticizer for polyamides.

According to a preferred embodiment, said ratio between the moles of (b) and the average functionality of (a) in terms of primary, secondary amine groups, and optionally of hydroxy groups, ranges from 6/1 to 2/1, preferably from 4/1 to 2/1.

The above mentioned condition implies that according to the present invention, "polyester polymer containing at least one amide group" means that said polymer contains at least one primary, secondary or tertiary carboxamide group, i.e. at least one C(=O)-N functional group and that, in case it contains two or more C(=O)-N functional groups, such groups do not derive from the reaction between monomers capable of bonding with each other by several reaction steps with the formation, for each reaction step, of an amide bond, thus leading to the increase of the molecular weight, but derive from the reaction of molecules which cannot be considered as "monomers" capable of providing polyamides under the considered conditions.

The conditions set forth above make the compound with at least one amine group (a) and the monomer with at least one carboxylic functional group (b) not able to polymerize each other and able to provide an amide, as defined above, wherein monomer (b) may polymerize to provide a polyester. As a matter of fact, monomer (b) being a hydroxyacid, this will react with itself with the formation of one or more ester bonds between the hydroxy group of one hydroxyacid molecule and the carboxylic group of another hydroxyacid molecule, de facto leading to the formation of a polyester chain comprising at least one amide bond. If compound (a) has only one primary or secondary amine group, and optionally one or more additional hydroxy groups, the compound obtained from its reaction with hydroxyacid monomer (b) will have a polyester chain with an amide bond, optionally one or more additional polyester chains bonded to compound (a) each through an ester bond; if compound (a) has two or more primary and/or secondary amine groups, optionally one or more additional hydroxy groups, the compound obtained from the reaction with hydroxyacid monomer (b) will be able to have two or more polyester chains each bonded to compound (a) through an amide bond, optionally one or more additional polyester chains each bonded to compound (a) through an ester bond.

According to a preferred embodiment, compound (a) is selected from:

- ammonia ($NH_3$);
- primary mono-amines of general formula (I)

$$R\text{-}NH_2 \qquad (I)$$

  wherein R is a linear or branched saturated or unsaturated aliphatic chain with a number of carbon atoms between 1 and 32, preferably between 1 and 18, still more preferably between 1 and 12 and still more preferably between 1 and 10, said primary amines being preferably selected from ethanamine, propanamine, 2-propanamine, butanamine, 2-methyl-propanamine, 2-butanamine, 2-methyl-2-propanamine, pentanamine, 2-methyl-butanamine, 3-methyl-butanamine, 2-pentanamine, 3-pentanamine, 2-methyl-2-butanamine, hexanamine, 2-methyl-pentanamine, 3-methyl-pentanamine, 4-methyl-pentanamine, 2-ethyl-butanamine, 3-ethyl-butanamine, 2-hexanamine, 3-hexanamine, 2-methyl-2-pentanamine, 3-methyl-3-pentanamine, 3-methyl-2-pentanamine, 4-methyl-2-pentanamine, eptanamine, 2-methyl-hexanamine, 3-methyl-hexanamine, 4-methyl-hexanamine, 5-methyl-hexanamine, 2-eptanamine, 3-eptanamine, 4-eptanamine, 2-methyl-2-hexanamine, 3-methyl-2-hexanamine, 4-methyl-2-hexanamine, 5-methyl-2-hexanamine, 2-methyl-3-hexanamine, 3-methyl-3-hexanamine, 4-methyl-3-hexanamine, 5-methyl-3-hexanamine, octanamine, 2-methyl-eptanamine, 3-methyl-eptanamine, 4-methyl-eptanamine, 5-methyl-eptanamine, 6-methyl-eptanamine, 2-octanamine, 3-octanamine, 4-octanamine, 2-ethyl-hexanamine, nonanamine and 2,2,4,4-tetramethyl-pentanamine;
- secondary mono-amines of general formula (II)

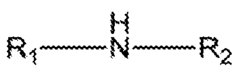

(II)

  wherein $R_1$ and $R_2$, being identical or different from each other, are linear or branched, saturated or unsaturated aliphatic chains with a number of carbon atoms between 1 and 32, preferably between 1 and 18, still more preferably between 1 and 12 and still more preferably between 1 and 10, said secondary amines being preferably selected from dimethylamine, diethylamine, dipropylamine, diisopropylamine, dibutylamine, diisobutylamine, dioctylamine and bis(2-ethylhexylamine);
- di/polyamines of general formula (III)

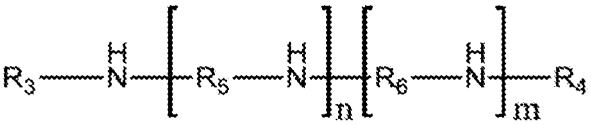

(III)

wherein $R_3$ and $R_4$, being identical or different from each other, are H or linear or branched, saturated or unsaturated aliphatic chains with a number of carbon atoms between 1 and 32, preferably between 1 and 18, still more preferably between 1 and 12 and still more preferably between 1 and 10; $R_5$ and $R_6$, being identical or different from each other, are linear or branched, saturated or unsaturated aliphatic chains with a number of carbon atoms between 1 and 32, preferably between 1 and 18, still more preferably between 1 and 12 and still more preferably between 1 and 10; n is between 0 and 10; m is between 0 and 10; m+n is between 1 and 10; said di/polyamines being preferably selected from ethylenediamine, diethylenetriamine, triethylenetetramine, tetraethylenepentamine, higher oligomers of ethylenediamine, 1,3-diaminopropane (propylenediamine), dipropylenetriamine, higher oligomers of propylenediamine 1,4-diaminobutane, 1,5-diaminopentane, 1,6-diaminohexane, (hexamethylenediamine), bis(hexamethylene)triamine), higher oligomers of hexamethylenediamine, 1,5-diamino-2-methyl-pentane, 1,3-diaminopentane, spermidine and spermine;

- cyclic aliphatic amines, preferably selected from 1,2-cyclohexanediamine, 1,3-cyclohexanediamine, 1,4-cyclohexanediamine, isophoronediamine, 3-methyl-1,2-cyclohexanediamine, 4-methyl-1,2-cyclohexanediamine, 4-methyl-1,3-cyclohexyldiamine, 2-methyl-1,3-cyclohexyldiamine, 5-methyl-1,3-cyclohexanediamine, 2-methyl-1,4-cyclohexanediamine and 1,3,5-cyclohexanetriamine, 3,3'-dimethyl-4,4'-diamino-dicyclohexylmethane and 4,4'-diamino-dicyclohexylmethane;
- aromatic amines, preferably selected from aniline, benzylamine, 1,2-diaminobenzene, 1,3-diaminobenzene, 1,4-diaminobenzene, m-phenylenebis(methylamine), 4,4'-diamino-diphenylmethane and 4-methyl-m-phenylenediamine and 2-methyl-p-phenylenediamine;
- heterocyclic amines, preferably selected from pyrrolidine, piperidine, piperazine and morpholine;
- amines with hydroxy and/or ether functional groups, preferably selected from ethanolamine, the 4,9-dioxa-1,12-dodecanediamine (CAS RN 7300-34-7) and the 4,7,10-trioxa-1,13-tridecanediamine (CAS RN 4246-51-9).

Amine mixtures can also be used.

According to a preferred embodiment, monomer (b) is in the lactone form.

According to a preferred embodiment, monomer (b) is selected from

- hydroxyacids of general formula (IV)

$$HOOC\text{-}R_9\text{-}OH \qquad (IV)$$

wherein $R_9$ is a linear or branched saturated or unsaturated aliphatic chain with a number of carbon atoms between 1 and 31, preferably between 1 and 17, still more preferably between 1 and 11 and still more preferably between 1 and 9, said hydroxyacids being preferably selected from glycolic acid, lactic acid, 4-hydroxybutyric acid, 4-hydroxy-valeric acid, 5-hydroxy-valeric acid, 4-hydroxy-capric acid, 5-hydroxy-capric acid, 6-hydroxy-capric acid;

- a lactone selected from gamma-butyrolactone, gamma-valerolactone, delta-valerolactone, gamma-caprolactone, delta-caprolactone, epsilon-caprolactone, glycolide (cyclic dimer of glycolic acid), lactide (cyclic dimer of lactic acid);

and mixtures thereof.

According to a preferred embodiment, monomer (b) is selected from epsilon-caprolactone (lactone of 6-hydroxycaproic acid), delta-valerolactone (lactone of 5-hydroxyvaleric acid), lactide (cyclic dimer of lactic acid), glycolide (cyclic dimer of glycolic acid) and mixtures thereof.

According to a preferred embodiment, compound (a) is selected from 1-butanamine, 2-ethyl-hexanamine, 1,6-diaminohexane, 1,5-diamino-2-methylpentane, isomers of methyl-cyclohexyldiamine and mixtures thereof, isophoronediamine, ethanolamine, ethylenediamine, diethylenetriamine, triethylenetetramine and mixtures thereof.

According to a preferred embodiment, monomer (b) is selected from epsilon-caprolactone, delta-valerolactone, lactide, glycolide and mixtures thereof, and compound (a) is selected from 1-butanamine, 2-ethyl-hexanamine, 1,6-diaminohexane, 1,5-diamino-2-methyl-pentane, isomers of methyl-cyclohexyldiamine and mixtures thereof, isophoronediamine, ethanolamine, ethylenediamine, diethylenetriamine, triethylenetetramine and mixtures thereof. Combinations of preferred monomers (b) and compounds (a) are as described in the Examples, also independently of the molar ratios expressly set forth herein. According to the present invention, number-average degree of polymerization of the polyester chains bonded to compound (a) through the amide bond, and optionally through the ester bond (when said compound

(a) contains one or more hydroxy groups) means the average number of monomers (b) bonded with each other, to form polyester chains, for single amide and optionally ester group deriving from the reaction of the chains of the same polyester with each primary, secondary amine, and optionally hydroxy group, of the at least one compound (a). The reagents (a) and (b) are reacted in molar ratios defined by "r"

$$r = \frac{moles\ of\ compunds\ (a)}{moles\ of\ monomers\ (b)}$$

wherein r is calculated as follows:

$$\frac{1}{10 * f_{NH+OH}} \leq r \leq \frac{1}{2 * f_{NH+OH}}$$

with an average length of the single polyester chains bonded with the compound (a) through the amide, and optionally ester bond, between 10 average units and 2 average units for each amide, and optionally ester group, more preferably

$$\frac{1}{6 * f_{NH+OH}} \leq r \leq \frac{1}{2 * f_{NH+OH}}$$

with an average length of the single polyester chains bonded with the compound (a) through the amide, and optionally ester bond, between 6 average units and 2 average units for each amide, and optionally ester group, still more preferably

$$\frac{1}{4 * f_{NH+OH}} \leq r \leq \frac{1}{2 * f_{NH+OH}}$$

with an average length of the single polyester chains bonded with the compound (a) through the amide, and optionally ester bond, between 4 average units and 2 average units for each amide, and optionally ester group,
wherein:
$f_{NH+OH}$ = average functionality in terms of primary, secondary amine, and optionally hydroxy groups, in compound (a).

The expression "average functionality" means herein that in case of mixtures of compounds, e.g. a compound (a) with a primary or secondary amine group and a compound (a) with two primary and/or secondary amine groups, the average functionality (i.e. the average number of amine groups present for number of moles of compounds (a)) will be calculated as weighted average with respect to the moles of the two compounds present in said mixture. The same obviously applies to the at least one monomer (b).

Mathematically, $f_{NH+OH}$ is defined as follows:

$$f_{NH+OH} = \frac{\sum_1^x (f_{(a)i} * moli_{(a)i})}{\sum_1^x moli_{(a)i}}$$

wherein:

$x$ = number of different compounds (a) in the mixture
$f_{(a)i}$ = number of primary and secondary amine groups, and optionally hydroxy groups, of each single different compound (a) in the mixture, with $i$ from 1 to $x$ $moles_{(a)i}$ = moles of each single different compound (a) in the mixture, with $i$ from 1 to $x$

According to the present invention, the number-average degree of polymerization of the polyester chains bonded with the compound (a) through amide bond, and optionally also through ester bond (when said compound (a) contains one or more hydroxy groups), is *1/r* (the inverse of *r* ratio defined above).

The polymer for the use according to the present invention can be prepared by means of different synthetic ways. The one skilled in the field is perfectly able to select the preparative procedures, temperatures and reaction times, type and amount of catalysts, way to recover and/or to purify the reaction product, optional unbalancing, with respect to the limits of the *"r"* ratios set forth, in the amount of the reagents initially used with following distillation and/or separation

and/or unreacted residue in the final product of the excess reagents with respect to the *"r"* ratios set forth, the use of additives, such as by way of example and without limitation, thermal and process stabilizers which are not limiting for the purpose of the present invention.

According to the invention, the reaction between reagents (a) and (b) is carried out in the presence of one or more catalysts; any catalyst suitable for the implementation of the reaction of the invention can be used, e.g. tin octanoate, titanium (IV) isopropoxide, preferably tin octanoate.

According to the invention, the reaction between reagents (a) and (b) can be carried out without solvents, however, if desired or necessary, one or more suitable solvents can be used.

Examples of the preparation of said polymer are provided in the following Experimental Section, however, for the one skilled in the field, it is clear that various synthetic methodologies can be used without departing from the scope of the protection of the present invention.

For the use according to the invention, the plasticizing polymer can be mixed with a polyamide, preferably polyamide 6, polyamide 6,6, polyamide 11, polyamide 12, polyamide 6,10, at the melted state, with the common mixing methods used in the field of polymer materials typically by means of a single-screw or twin-screw extruder, more preferably twin-screw, e.g. with co-rotating or counter-rotating screws.

The plasticizing polymer (or a mixture of polymers of the invention) of the invention can be added in an amount from 5 wt% to 40 wt% with respect to the total weight, where "total weight" means the sum of the weights of the polymer of the invention and of the polyamide, more preferably from 5 wt% to 30 wt% with respect to the total weight and still more preferably from 5 wt% to 25 wt% with respect to the total weight.

The polyamides plasticized with the polymer of the invention, i.e. the mixtures of polyamides and polymer described herein, represent a further subject-matter of the invention.

Further subject-matter of the invention is a method to plasticize polyamides, which comprises the addition to said polyamides of an amount effective as plasticizer of a polymer as defined above.

The preferred technical characteristics set forth above, with respect to the use of the polymer described herein, also apply to the method of the invention.

The invention will be now described in detail in the following Experimental Section, by illustrative way only and without limitation.

## Experimental section

### General procedure for the reaction between hydroxyacids and amines

In a stainless steel flanged cylindrical reactor the starting hydroxyacid compounds in their closed form (lactones) are charged together with the compounds with at least one amine functional group, the catalysts and the optional process stabilizers in the amounts set forth in the same examples. The reactor is equipped with two stainless steel tubes welded to the cylindrical body, which are equipped with two ball valves which can be used to allow the inflow and the outflow of gases and vapors; the reactor is completed by a flanged head, which can be sealingly connected with the reactor body and equipped with a mixer with a stainless steel mixing shaft.

Before proceeding with the heating, in a suitable oven, of the reactor charged with the reagents, the reaction atmosphere is purged to remove the oxygen present with suitable vacuum-nitrogen cycles in order to introduce, at the end of this process, nitrogen at atmospheric pressure and close the ball valves to keep the reaction environment without both incoming and outgoing gas fluxes for the whole reaction duration. The ball valves and the reactor guarantee tightness of the pressure which can develop within the reactor due to the heating effect.

The reaction is carried out by heating to the temperature and for the time set forth in the same examples.

At the end of the reaction, the reaction mixture is left cooling to room temperature while keeping the reactor closed and after that it is recovered as a product at room temperature. The so-synthesized and recovered product is the plasticizer without the need of further treatments.

In case ammonia or gaseous amines are used, such compounds will be added in the gas phase and in controlled amount into the reactor at the end of the vacuum-nitrogen cycles and of the last nitrogen feed at ambient pressure.

Example 1

A plasticizer is obtained with the synthesis method described above, starting from the following formulation (number-average degree of polymerization of the polyester chains bonded with compound (a) through amide bond, and optionally through ester bond, when compound (a) has one or more hydroxy groups, (*1/r*) ~ 3.5):

- 101.43 g of epsilon-caprolactone (reagent)
- 18.57 g of 1-butanamine (reagent)

- 0.12 g of Sn octanoate (catalyst)
- 0.30 g of IRGANOX B1171 (thermal/antioxidant stabilizer)

Reaction is carried out for 4 hours at 190°C.
The obtained product is a white/yellowish clear liquid which tends to solidify over time (waxy texture) at room temperature. At about 50°C it returns to the fluid liquid state.

Example 2

A plasticizer is obtained with the above described synthesis method, starting from the following formulation (*1/r* ~ 3):

- 87.12 g of epsilon-caprolactone (reagent)
- 32.88 g of 2-ethyl-hexanamine (reagent)
- 0.12 g of Sn octanoate (catalyst)
- 0.30 g of IRGANOX B1171 (thermal/antioxidant stabilizer)

Reaction is carried out for 4 hours at 190°C.
The obtained product is a white/yellowish clear liquid.

Example 3

A plasticizer is obtained with the above described synthesis method, starting from the following formulation (*1/r* ~ 3):

- 101.08 g of epsilon-caprolactone (reagent)
- 18.02 g of isomers of methyl-1,3-cyclohexyldiamine (produced by Baxxodur EC210 of BASF) (reagent)
- 0.12 g of Sn octanoate (catalyst)
- 0.30 g of IRGANOX B 1171 (thermal/antioxidant stabilizer)

Reaction is carried out for 4 hours at 190°C.
The obtained product is a white/yellowish clear and highly viscous paste. At about 80°C it gets a fluid liquid texture.

Example 4

A plasticizer is obtained with the above described synthesis method, starting from the following formulation (*1/r* ~ 3):

- 92.21 g of epsilon-caprolactone (reagent)
- 20.88 g of 2-ethyl-hexanamine (reagent)
- 6.91 g of isomers of methyl-1,3-cyclohexyldiamine (produced by Baxxodur EC210 of BASF) (reagent)
- 0.12 g of Sn octanoate (catalyst)
- 0.30 g of IRGANOX B 1171 (thermal/antioxidant stabilizer)

Reaction is carried out for 4 hours at 190°C.
The obtained product is a white/yellowish clear viscous liquid.

Example 5

A plasticizer is obtained with the above described synthesis method, starting from the following formulation (*1/r* ~ 3):

- 93.53 g of epsilon-caprolactone (reagent)
- 26.47 g of 2-ethyl-hexanamine (reagent)
- 0.12 g of Sn octanoate (catalyst)
- 0.30 g of IRGANOX B 1171 (thermal/antioxidant stabilizer)

Reaction is carried out for 4 hours at 190°C.

The obtained product is a white/yellowish clear liquid which tends to become milky and solidify (waxy texture) over time at room temperature. At about 50°C it returns to the clear liquid state.

Example 6

A plasticizer is obtained with the above described synthesis method, starting from the following formulation (*1/r* ~ 3):

- 96.10 g of epsilon-caprolactone (reagent)
- 23.90 g of isophoronediamine (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a white/yellowish clear viscous liquid.

Example 7

A plasticizer is obtained with the above described synthesis method, starting from the following formulation (*1/r* ~ 3):

- 108.42 g of epsilon-caprolactone (reagent)
- 11.58 g of triethylenetetramine 60% technical grade (produced by Sigma Aldrich - Cod. 132098) (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a yellowish clear viscous liquid which tends to become a highly viscous paste over time at room temperature. At about 60°C it returns to the fluid liquid state.

Example 8

A plasticizer is obtained with the above described synthesis method, starting from the following formulation (*1/r* ~ 2.75):

- 98.47 g of epsilon-caprolactone (reagent)
- 11.47 g of 1-butanamine (reagent)
- 10.06 g of isomers of methyl-1,3-cyclohexyldiamine (produced by

Baxxodur EC210 of BASF) (reagent)

- 0.12 g of Sn octanoate (catalyst)
- 0.30 g of IRGANOX B 1171 (thermal/antioxidant stabilizer)

Reaction is carried out for 4 hours at 190°C.

The obtained product is a white/yellowish clear viscous liquid which tends to become gelatinous with a highly viscous texture at room temperature. At about 50°C it returns to the fluid liquid state.

Example 9

A plasticizer is obtained with the above described synthesis method, starting from the following formulation (*1/r* ~ 2.75):

- 91.74 g of epsilon-caprolactone (reagent)
- 18.88 g of 2-ethyl-hexanamine (reagent)
- 9.37 g of isomers of methyl-1,3-cyclohexyldiamine (produced by Baxxodur EC210 of BASF) (reagent)
- 0.12 g of Sn octanoate (catalyst)

- 0.30 g of IRGANOX B 1171 (thermal/antioxidant stabilizer)

Reaction is carried out for 4 hours at 190°C.

The obtained product is a white/yellowish clear viscous liquid which tends to become gelatinous with a highly viscous texture at room temperature. At about 50°C it returns to the fluid liquid state.

Example 10

A plasticizer is obtained with the above described synthesis method, starting from the following formulation (*1*/*r* ~ 4):

- 54.61 g of epsilon-caprolactone (reagent)
- 47.90 g of gamma-valerolactone (reagent)
- 17.50 g of butanamine (reagent)
- 0.12 g of Sn octanoate (catalyst)
- 0.30 g of IRGANOX B 1171 (thermal/antioxidant stabilizer)

Reaction is carried out for 20 hours at 150°C.

The obtained product is a white/yellowish clear liquid at room temperature.

Example 11

A plasticizer is obtained with the above described synthesis method, starting from the following formulation (*1*/*r* ~ 2.75):

- 98.24 g of epsilon-caprolactone (reagent)
- 13.73 g of 1-butanamine (reagent)
- 8.03 g of isomers of methyl-1,3-cyclohexyldiamine (produced by Baxxodur EC210 of BASF) (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a white/yellowish clear liquid.

Example 12

A plasticizer is obtained with the above described synthesis method, starting from the following formulation (*1*/*r* ~ 2.75):

- 95.84 g of epsilon-caprolactone (reagent)
- 11.17 g of 1-butanamine (reagent)
- 13.00 g of isophoronediamine (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a white/yellowish clear viscous liquid.

Example 13

A plasticizer is obtained with the above described synthesis method, starting from the following formulation (*1*/*r* ~ 3):

- 98.88 g of epsilon-caprolactone (reagent)
- 21.12 g of 1-butanamine (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a white/yellowish clear liquid.

Example 14

A plasticizer is obtained with the above described synthesis method, starting from the following formulation (*1/r* - 2.75):

- 89.45 g of epsilon-caprolactone (reagent)
- 18.42 g of 2-ethyl-hexanamine (reagent)
- 12.13 g of isophorondiamine (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a white/yellowish clear viscous liquid.

Example 15

A plasticizer is obtained with the above described synthesis method, starting from the following formulation (*1/r* - 2.75):

- 89.70 g of epsilon-caprolactone (reagent)
- 17.50 g of 2-ethyl-hexanamine (reagent)
- 12.80 g of isophorondiamine (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a white/yellowish clear viscous liquid.

Example 16

A plasticizer is obtained with the above described synthesis method, starting from the following formulation (*1/r* ~ 2.75):

- 92.33 g of epsilon-caprolactone (reagent)
- 17.48 g of 2-ethyl-hexanamine (reagent)
- 10.19 g of isomers of methyl-1,3-cyclohexyldiamine (produced by Baxxodur EC210 of BASF) (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a white/yellowish clear viscous liquid.

Some of the plasticizing polymers (Examples 2, 3, 6, 7, 9, 13 and 14) have been analyzed by FTIR carried out with the UATR system (Universal Attenuated Total Reflection) with diamond crystal by directly placing the sample on the crystal without any treatment.

Range of wavenumbers: 4000 - 500 cm-1
Resolution: 4 cm-1
Number of scans: 4

The corresponding plots are reported in the appended figures.

Example 17 - Comparative

A plasticizer is obtained with the above described synthesis method, starting from the following formulation (*1/r* ~ 1):

- 73.14 g of epsilon-caprolactone (reagent)
- 46.86 g of 1-butanamine (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a white/yellowish clear liquid.

Example 18 - Comparative

A plasticizer is obtained with the above described synthesis method, starting from the following formulation (*1/r* ~ 1):

- 56.28 g of epsilon-caprolactone (reagent)
- 63.72 g of 2-ethyl-hexanamine (reagent)
- 0.12 g of Sn octanoate (catalyst)
- 0.30 g of IRGANOX B1171 (thermal/antioxidant stabilizer)

Reaction is carried out for 4 hours at 190°C.

The obtained product is a white/yellowish clear liquid.

Example 19 - Comparative

A plasticizer is obtained with the above described synthesis method, starting from the following formulation (*1/r* ~ 1):

- 74.57 g of epsilon-caprolactone (reagent)
- 28.67 g of 1-butanamine (reagent)
- 16.75 g of isomers of methyl-1,3-cyclohexyldiamine (produced by Baxxodur EC210 of BASF) (reagent)
- 0.12 g of Sn octanoate (catalyst)
- 0.30 g of IRGANOX B 1171 (thermal/antioxidant stabilizer)

Reaction is carried out for 4 hours at 190°C.

The obtained product is a white/yellowish clear liquid.

Example 20 - Comparative

A plasticizer is obtained with the above described synthesis method, starting from the following formulation (*1/r* ~ 1):

- 70.86 g of epsilon-caprolactone (reagent)
- 22.71 g of 1-butanamine (reagent)
- 26.43 g of isophorondiamine (reagent)
- 0.12 g of Sn octanoate (catalyst)
- 0.30 g of IRGANOX B 1171 (thermal/antioxidant stabilizer)

Reaction is carried out for 4 hours at 190°C.

The obtained product is a white/yellowish clear viscous liquid.

## Analysis

Some of the products obtained in the examples described have been analyzed by thermogravimetric analysis, TGA, to evaluate the thermal stability. The TGA analyses have been carried out by using an alumina crucible by weighting about 5-10 mg of sample. The thermal cycle used to carry out the analysis is the following:

- heating from 30°C to 800°C at 20°C/min under nitrogen flux at 20 ml/min. As properties of the synthesized products the temperatures at which the loss of 5 wt% ($T_{5\%}$), 10 wt% ($T_{10\%}$) and 50 wt% ($T_{50\%}$) occurred have been considered.

In Table-1 the measured properties for the synthesized products are set forth. Where absent, the properties have not been measured.

Table-1: Temperatures at which a loss of 5 wt% ($T_{5\%}$), 10 wt% ($T_{10\%}$) and 50 wt% ($T_{50\%}$) occurred in TGA analysis

| Plasticizer | $T_{5\%}$ (°C) | $T_{10\%}$ (°C) | $T_{50\%}$ (°C) |
|---|---|---|---|
| Example 1 | 274.79 | 289.88 | 325.53 |
| Example 2 | 260.89 | 274.44 | 304.14 |
| Example 3 | 307.79 | 321.55 | 368.19 |
| Example 4 | 272.90 | 288.93 | 324.95 |
| Example 5 | 264.70 | 280.02 | 309.80 |
| Example 6 | 286.38 | 301.50 | 353.10 |
| Example 7 | 321.40 | 339.63 | 392.44 |
| Example 8 | 282.23 | 299.06 | 339.30 |
| Example 9 | 286.25 | 302.32 | 340.35 |
| Example 10 | 234.28 | 254.96 | 303.87 |
| Example 11 | 269.85 | 286.82 | 325.60 |
| Example 12 | 263.48 | 276.64 | 315.16 |
| Example 13 | 246.24 | 263.18 | 295.36 |

From the measurements set forth in Table-1 it can be observed that nearly all the products synthesized in the synthesis examples start degrading and/or tend evaporating at a temperature above 230°C and are therefore suitable to be mixed with polyamide 6 in the melted phase (compounding), considering that polyamide 6 has a melting temperature of about 220°C.

COMPOUNDING EXAMPLES

The products obtained in the Examples have been compounded with polyamide 6 (Nylon 6) with a relative viscosity of 2.7 in $H_2SO_4$ by a lab twin-screw extruder (Thermo Scientific Process 11) with co-rotating screws of 11 mm diameter and a ratio L/D=40.

The twin-screw extruder used is equipped with a main feeding zone with a volumetric feeder (main Feeder) for the charge of raw Nylon 6 granules and a secondary feeding zone with a peristaltic pump (peristaltic pump Feeder) for the charge along the extrusion line of the plasticizers as liquids; the plasticizers with a waxy solid or high viscous paste texture at room temperature have been kept at suitable temperatures (usually between 50°C and 80°C depending on the plasticizer) in order to have them in the form of fluid liquids during the charging process. The compounding process, carried out continuously, allows the recovery of the wire at the outlet of the extruder itself (Die), said wire being cooled by passing it in a tank containing water and afterwards it is granulated continuously with a suitable cutter.

Raw Nylon 6 used for the mixtures in the extruder has been previously dried at 80°C for 4 hours under anhydrous nitrogen flux.

Table-2 depicts the scheme of the extruder with the indication of the charging zone and the profile of the temperatures used in all the compounding tests described below.

Table-2: Schematic representation of the extrusion profile

| **Feeder Type** | Main | | | Peristaltic pump | | | | | Wire outlet |
|---|---|---|---|---|---|---|---|---|---|
| **Charging Speed** | Set forth in the examples | | | Set forth in the examples | | | | | |
| **Zone** | 1 | 2 | 3 | 4 | 5 | 6 | 7 | 8 | Die |

(continued)

| **Feeder Type** | Main | | | Peristaltic pump | | | | | Wire outlet |
|---|---|---|---|---|---|---|---|---|---|
| **Charging Speed** | Set forth in the examples | | | Set forth in the examples | | | | | |
| **Temperature (°C)** | Not applicable | 240 | 245 | 245 | 245 | 240 | 235 | 230 | 190 |

The main feeder and peristaltic pump are both volumetric feeders and have been calibrated before carrying out the compounding tests.

In Tables 3 and 4 the calibrations of the main feeder used for the charge of raw Nylon 6 granules and of the peristaltic pump used for the charge of the plasticizer as a liquid in zone 4 along the extrusion line, are set forth respectively.

Table-3: Charge of raw Nylon 6 with the main feeder.

| **Main Feeder** | |
|---|---|
| **revolutions per minute** | **g charged in 1 minute** |
| 2 | 2.0559 |
| 3 | 3.2290 |
| 4 | 5.0499 |
| 5 | 5.7679 |
| 6 | 6.4137 |
| 7 | 7.4587. |

Table-4: Charge of plasticizer with the peristaltic pump.

| **Peristaltic Pump** | |
|---|---|
| **nominal ml/min** | **g charged in 1 minute** |
| 0.3 | 0.3309 |
| 0.4 | 0.4116 |
| 0.5 | 0.5280 |
| 0.6 | 0.6219 |
| 0.7 | 0.7154 |
| 0.8 | 0.8449 |
| 0.9 | 0.9205 |
| 1.0 | 1.0402 |

The compound deriving from the first compounding example will be named CPD-1 and similarly for the following compounding examples.

In Table-5 the compounds produced as described above, starting from raw Nylon 6 with the addition of the plasticizers synthesized in the synthesis examples, are shown. In the table, for each compounding example, the type of plasticizer used, the numbers of revolutions per minute of the main feeder, the nominal ml/min of the peristaltic pump and the theoretical % of plasticizer in the final compound depending on what set forth in Tables-3 and 4, are shown. A reference compound (CPD-comp) has been also extruded in order to evaluate the properties of Nylon 6 without plasticizer after it has undergone the same processing steps (similar thermo-mechanical stresses) of the plasticized polymers.

Table-5: Compounds produced starting from raw Nylon 6 with the addition of the synthesized plasticizers.

| Compound | Plasticizer | Main Feeder Revolutions/min | peristaltic pump ml/min | theoretical charge % of the plasticizer in the compound |
|---|---|---|---|---|
| CPD-comp | none | 4 | 0 | 0 |
| CPD-1 | Example 1 | 4 | 0.3 | 6.1 |
| CPD-2 | Example 1 | 4 | 0.6 | 11.0 |
| CPD-3 | Example 1 | 4 | 0.9 | 15.4 |
| CPD-4 | Example 2 | 4 | 0.3 | 6.1 |
| CPD-5 | Example 2 | 4 | 0.6 | 11.0 |
| CPD-6 | Example 2 | 4 | 0.9 | 15.4 |
| CPD-7 | Example 3 | 4 | 0.3 | 6.1 |
| CPD-8 | Example 3 | 4 | 0.6 | 11.0 |
| CPD-9 | Example 3 | 4 | 0.9 | 15.4 |
| CPD-10 | Example 4 | 4 | 0.3 | 6.1 |
| CPD-11 | Example 4 | 4 | 0.6 | 11.0 |
| CPD-12 | Example 4 | 4 | 0.9 | 15.4 |
| CPD-13 | Example 5 | 4 | 0.3 | 6.1 |
| CPD-14 | Example 5 | 4 | 0.6 | 11.0 |
| CPD-15 | Example 5 | 4 | 0.9 | 15.4 |
| CPD-16 | Example 6 | 4 | 0.3 | 6.1 |
| CPD-17 | Example 6 | 4 | 0.6 | 11.0 |
| CPD-18 | Example 6 | 4 | 0.9 | 15.4 |
| CPD-19 | Example 7 | 4 | 0.3 | 6.1 |
| CPD-20 | Example 7 | 4 | 0.6 | 11.0 |
| CPD-21 | Example 7 | 4 | 0.9 | 15.4 |
| CPD-22 | Example 8 | 4 | 0.9 | 15.4 |
| CPD-23 | Example 8 | 3 | 0.8 | 20.7 |
| CPD-24 | Example 9 | 4 | 0.9 | 15.4 |
| CPD-25 | Example 9 | 3 | 0.8 | 20.7 |
| CPD-26 | Example 10 | 4 | 0.6 | 11.0 |
| CPD-27 | Example 11 | 3 | 0.8 | 20.7 |
| CPD-28 | Example 12 | 3 | 0.8 | 20.7 |
| CPD-29 | Example 13 | 3 | 0.8 | 20.7 |
| CPD-30 | Example 14 | 3 | 0.8 | 20.7 |
| CPD-31 | Example 15 | 4 | 0.9 | 15.4 |
| CDP-32 | Example 16 | 4 | 0.9 | 15.4 |
| CDP-33 | Example 17 - Comparative | 4 | 0.9 | 15.4 |
| CDP-34 | Example 18 - Comparative | 4 | 0.6 | 11.0 |

(continued)

| Compound | Plasticizer | Main Feeder Revolutions/min | peristaltic pump ml/min | theoretical charge % of the plasticizer in the compound |
|---|---|---|---|---|
| CDP-35 | Example 19 - Comparative | 4 | 0.9 | 15.4 |
| CDP-36 | Example 20 - Comparative | 4 | 0.9 | 15.4 |

In the comparative Examples it has been prepared a compound by reacting caprolactone and amines with a ratio of 1 between the moles of caprolactone (monomer (b)) and the average functionality $f_{NH+OH}$ of the compounds (a) used. De facto, the compounds CPD-33, 34, 35, 36 at room temperature (23°C and 50% relative humidity) are not stable and the plasticizer migrates outside the polyamide, oozing out significantly (the compound granules have not been printed just due to instability).

Some of the products obtained in the compounding examples described have been analyzed by differential scanning calorimetry (DSC) to evaluate the thermal property. The DSC analyses have been carried out by using 40 μl aluminum crucibles by weighting about 5-10 mg of sample. In the measurement cell the atmosphere has been kept inert with a constant nitrogen flux. The thermal cycle used to carry out the analysis is the following:

- first heating from 25°C to 250°C at 20°C/min
- keeping for 2 minutes at 250°C
- cooling from 250°C to 25°C at 20°C/min
- keeping for 2 minutes at 25°C
- second heating from 25°C to 250°C at 20°C/min

As thermal properties of the synthesized polymers the following have been considered:

- crystallization temperature (Tc) measured during the cooling step;
- melting temperature (Tm) measured during the second heating step.

In Table-6 the measured properties for the produced materials are set forth. Where absent, the properties have not been measured.

Table-6: Thermal properties of Nylon 6 plasticized compounds produced

| Compound | Tc (°C) | Tm (°C) |
|---|---|---|
| CPD-comp | 184.70 | 218.92 |
| CPD-1 | 183.69 | 217.61 |
| CPD-2 | 182.98 | 217.44 |
| CPD-3 | 182.96 | 216.77 |
| CPD-4 | 185.63 | 217.86 |
| CPD-5 | 184.61 | 217.19 |
| CPD-6 | 184.31 | 216.89 |
| CPD-7 | 183.58 | 218.49 |
| CPD-8 | 184.12 | 217.81 |
| CPD-9 | 184.38 | 216.96 |
| CPD-10 | 183.76 | 218.28 |
| CPD-11 | 184.13 | 217.05 |
| CPD-12 | 183.92 | 216.92 |
| CPD-13 | 183.27 | 218.14 |

(continued)

| Compound | Tc (°C) | Tm (°C) |
|---|---|---|
| CPD-14 | 183.76 | 217.58 |
| CPD-15 | 183.49 | 217.03 |
| CPD-16 | 183.29 | 218.03 |
| CPD-17 | 183.20 | 217.72 |
| CPD-18 | 183.73 | 217.74 |
| CPD-19 | 183.78 | 218.43 |
| CPD-20 | 183.46 | 218.55 |
| CPD-21 | 182.68 | 218.89 |
| CPD-22 | 182.85 | 216.50 |
| CPD-23 | 182.42 | 215.56 |
| CPD-24 | 182.79 | 216.70 |
| CPD-25 | 182.22 | 216.01 |
| CPD-26 | 182.35 | 217.27 |
| CPD-27 | 182.01 | 215.98 |
| CPD-28 | 182.23 | 216.65 |
| CPD-29 | 182.09 | 215.77 |

From the measurements set forth in Table-6 it can be observed that the plasticizers used in the CPD-1 to CPD-18 and CPD-22 to CPD-31 compounding experiments lead to a reduction of the melting temperature of the compound as the amount of plasticizer introduced increases. This tendency shows that the plasticizers create a chemico-physical interaction with Nylon and in particular with its amide groups which are responsible for the crystalline phase of Nylon itself.

In the CPD-19 to CPD-21 compounds this tendency is not observed. In this case the plasticizer of Example 7 (used in these compounds) is probably too sterically hindered to allow a significant chemico-physical interaction of the plasticizer itself, through its amide bonds, with the amide bonds of Nylon 6. In spite of this, the plasticizer of Example 7 showed however an effect in the reduction of the moduli and therefore efficacy as plasticizer.

The crystallization temperatures are poorly significant since the observed transition, as it is typical in the polymer materials, occurs under subcooling conditions and therefore not at the thermodynamic equilibrium and the factors influencing it are numerous, among which the material fluidity (kinetic factor). Some the compounds produced in the compounding examples have been molded by means of a laboratory injection molding press (Babyplast). The press is equipped with a mold to mold test samples according to the ISO 527 5A regulation with a thickness equal to 2.4 mm.

The injection molding press provides the regulation of 3 different temperature zones and in particular:
For the reference CPD-comp compound:

- plasticization zone set at 250°C
- injection chamber set at 235°C
- injection nozzle set at 230°C

For all the other compounds of plasticized Nylon 6:

- plasticization zone set at 235°C
- injection chamber set at 225°C
- injection nozzle set at 220°C

The mold has been maintained at 80°C.

The compounds used to mold the test samples have been previously dried under an anhydrous nitrogen flux with the time and temperature conditions set forth in Table-7. The test samples have been cut in the central part in order to obtain test samples of suitable dimensions to carry out dynamo-mechanical tests (DMA) by means of a rotational

rheometer Anton Paar MCR302 equipped with SRF12 module for the DMA analysis of test samples of parallelepiped form of maximum dimensions equal to 12x12x50 mm. The test samples for the DMA analysis obtained from the cut of the molded test samples according to ISO 527 5A regulation have approximately a size equal to 2.5x5x24mm precisely measured with a caliber graduated in 0.5mm increments (±0.05mm). All the test samples have been conditioned in a Binder climatic chamber at the temperature of 23°C and at 50% relative humidity for at least 120 h.

The DMA analyses have been carried out in order to measure, at the temperature of 23°C, the behavior of the elastic modulus G' and of the viscous modulus G" related to the frequency variation of the application of the strain to the test samples obtained with the plasticized polymers produced in the compounding experiments.

In Table-7 the values of G' and G" measured at the oscillation frequencies of 0.1 Hz, 1 Hz and 10 Hz are set forth for the test samples obtained with the different compounds of plasticized Nylon 6.

Table-7: Elastic modulus (G') and viscous modulus (G") of the test samples obtained with the different compounds of plasticized Nylon 6. Notes: (a) slight migration of the plasticizer during drying; molding not compromised.

| Compound | Plasticizer | theoretical % w/w charge | Drying conditions | G' 0.1Hz (Pa) | G" 1Hz (Pa) | G' 1Hz (Pa) | G" 10Hz (Pa) | G' 10Hz (Pa) | G" 10Hz (Pa) |
|---|---|---|---|---|---|---|---|---|---|
| CPD-comp | - | 0 | 80°C - 4h | 405.900 | 53.078 | 492.190 | 58.885 | 578.910 | 63.199 |
| CPD-1 | Example 1 | 6.1 | 80°C - 4h | 247.880 | 30.755 | 308.250 | 41.865 | 378.410 | 55.000 |
| CPD-2 | Example 1 | 11.0 | 75°C - 4h | 203.520 | 23.840 | 245.740 | 32.342 | 300.410 | 45.079 |
| CPD-3 | Example 1 | 15.4 | 60°C - 5h (a) | 193.420 | 22.896 | 232.560 | 30.864 | 283.040 | 42.959 |
| CPD-4 | Example 2 | 6.1 | 80°C - 4h | 287.850 | 36.060 | 351.680 | 46.498 | 426.690 | 59.068 |
| CPD-5 | Example 2 | 11.0 | 75°C - 4h | 228.420 | 26.961 | 277.740 | 36.169 | 337.860 | 48.533 |
| CPD-7 | Example 3 | 6.1 | 80°C - 4h | 288.180 | 38.743 | 354.090 | 48.276 | 432.060 | 59.010 |
| CPD-8 | Example 3 | 11.0 | 75°C - 4h | 277.470 | 37.381 | 342.680 | 48.644 | 423.280 | 61.260 |
| CPD-10 | Example 4 | 6.1 | 80°C - 4h | 276.500 | 36.186 | 33 | 46.681 | 413.840 | 59.264 |
| CPD-11 | Example 4 | 11.0 | 75°C - 4h | 216.140 | 26.085 | 268.690 | 36.168 | 330.310 | 48.958 |
| CPD-12 | Example 4 | 15.4 | 60°C - 5h | 191.790 | 24.147 | 233.580 | 32.093 | 287.610 | 43.265 |
| CPD-13 | Example 5 | 6.1 | 80°C - 4h | 284.000 | 37.959 | 348.150 | 47.024 | 423.450 | 57.331 |
| CPD-14 | Example 5 | 11.0 | 75°C - 4h | 258.560 | 33.620 | 316.890 | 43.139 | 388.060 | 54.619 |
| CPD-16 | Example 6 | 6.1 | 80°C - 4h | 298.940 | 41.140 | 367.660 | 50.744 | 448.090 | 51.036 |
| CPD-17 | Example 6 | 11.0 | 75°C - 4h | 251.250 | 35.020 | 312.050 | 45.722 | 387.740 | 58.297 |
| CPD-18 | Example 6 | 15.4 | 60°C - 5h | 205.790 | 29.057 | 255.370 | 38.189 | 317.190 | 49.713 |
| CPD-19 | Example 7 | 6.1 | 80°C - 4h | 281.140 | 38.516 | 348.820 | 47.178 | 424.050 | 56.609 |
| CPD-20 | Example 7 | 11.0 | 75°C - 4h | 255.240 | 34.306 | 313.830 | 43.159 | 383.800 | 53.220 |
| CPD-22 | Example 8 | 15.4 | 60°C - 5h | 182.130 | 22.157 | 220.750 | 29.853 | 270.890 | 41.407 |
| CPD-23 | Example 8 | 20.7 | 60°C - 5h (a) | 154.490 | 16.570 | 183.000 | 22.633 | 221.610 | 32.970 |
| CPD-24 | Example 9 | 15.4 | 60°C - 5h | 200.460 | 26.095 | 245.520 | 34.347 | 302.540 | 45.741 |
| CPD-25 | Example 9 | 20.7 | 60°C - 5h (a) | 164.030 | 18.978 | 197.490 | 26.301 | 243.110 | 37.850 |
| CPD-26 | Example 10 | 11.0 | 75°C - 4h | 228.260 | 28.615 | 276.580 | 36.389 | 337.010 | 46.878 |
| CPD-27 | Example 11 | 20.7 | 60°C - 5h | 156.640 | 17 267 | 186.660 | 23.547 | 226.950 | 34.066 |

(continued)

| Compound | Plasticizer | theoretical % w/w charge | Drying conditions | G' 0.1Hz (Pa) | G" 1Hz (Pa) | G' 1Hz (Pa) | G" 10Hz (Pa) | G' 10Hz (Pa) | G" 10Hz (Pa) |
|---|---|---|---|---|---|---|---|---|---|
| CPD-28 | Example 12 | 20.7 | 60°C - 5h | 149.720 | 16.260 | 178.37 | 22.630 | 217.63 | 33.519 |
| CPD-29 | Example 13 | 20.7 | 60°C - 5h (a) | 164.840 | 17.594 | 194.980 | 23.663 | 235.500 | 34.026 |
| CPD-30 | Example 14 | 20.7 | 60°C - 5h | 164.555 | 23.883 | 207.542 | 31.322 | 262.688 | 42.362 |
| CPD-31 | Example 15 | 15.4 | 60°C - 5h | 208.016 | 26.942 | 257.350 | 35.327 | 320.532 | 47.439 |
| CDP-32 | Example 16 | 15.4 | 60°C - 5h | 190.847 | 23.527 | 234.708 | 31.271 | 290.937 | 42.952 |

From the measurements set forth in Table-7, it can be observed that the plasticizers used in all the compounding experiments lead to a reduction of both the elastic modulus (G') and the viscous modulus (G") of the obtained materials with respect to the not-plasticized polymer (CPD-comp.). In particular, it can be also observed that as the wt% of the plasticizer introduced in the compounds increases, the plasticizer being equal, the G' and G" moduli decrease and therefore as the wt% of introduced plasticizer increases, the plasticizing effect increases thus confirming the effectiveness of the compounds subject-matter of the present invention as plasticizers for polyamides.

## Claims

1. Use of a polyester polymer containing at least one amide group constituted by the bond between:

   - type (a) reagents: compounds with at least one primary or secondary amine functional group and optionally one or more hydroxy groups or a derivative of said hydroxy groups,
   - type (b) reagents: aliphatic hydroxyacid monomers having from 2 to 32 carbon atoms containing at least one carboxylic group and at least one hydroxy group, or derivatives thereof,

   said polymer having polyester chains bonded to the at least one primary or secondary amine functional group of the type (a) reagent compound through said amide bond, and said chains having a number-average degree of polymerization between 2 and 10,
   as a plasticizer for polyamides.

2. Use according to claim 1, **characterized in that** said polymer is obtained from the reaction between:

   - at least one compound (a) selected from

     ◦ ammonia and
     ◦ a compound containing at least one primary or secondary amine group and optionally containing one or more hydroxy groups, and

   - at least one aliphatic hydroxyacid monomer (b), or a derivative thereof, containing at least one carboxylic group or a derivative thereof and at least one hydroxy group or a derivative thereof,

   provided that:

   - if compound (a) has two or more functional groups selected from primary amine groups and secondary amine groups, and/or one or more hydroxy groups, then monomer (b) has only one carboxylic functional group,
   - if compound (a) has only one amine group, then monomer (b) can have one or more carboxylic functional groups, and
   - the ratio between the moles of (b) and the average functionality of (a) in terms of primary, secondary, amine groups and optionally of hydroxy groups, ranging from 10/1 to 2/1.

3. Use according to claim 2, **characterized in that** the ratio between the moles of (b) and the average functionality of (a) in terms of primary, secondary, amine groups and optionally of hydroxy groups, ranges from 6/1 to 2/1.

4. Use according to claim 3, **characterized in that** the ratio between the moles of (b) and the average functionality of (a) in terms of primary, secondary, amine groups and optionally of hydroxy groups, ranges from 4/1 to 2/1.

5. Use according to any one of claims 1 to 4, **characterized in that** said compound (a) is selected from:

   - ammonia ($NH_3$)
   - primary mono-amines of general formula (I)

   $$R\text{-}NH_2 \qquad (I)$$

   wherein R is a linear or branched saturated or unsaturated aliphatic chain with a number of carbon atoms between 1 and 32, preferably between 1 and 18, still more preferably between 1 and 12 and still more preferably between 1 and 10, said primary amines being preferably selected from ethanamine, propanamine, 2-propanamine, butanamine, 2-methyl-propanamine, 2-butanamine, 2-methyl-2-propanamine, pentanamine, 2-methyl-butanamine, 3-methyl-butanamine, 2-pentanamine, 3-pentanamine, 2-methyl-2-butanamine, hexanamine, 2-methyl-pentanamine, 3-methyl-pentanamine, 4-methyl-pentanamine, 2-ethyl-butanamine, 3-ethyl-butanamine, 2-hexanamine, 3-hexanamine, 2-methyl-2-pentanamine, 3-methyl-3-pentanamine, 3-methyl-2-pentanamine, 4-methyl-2-pentanamine, eptanamine, 2-methyl-hexanamine, 3-methyl-hexanamine, 4-methyl-hexanamine, 5-methyl-hexanamine, 2-eptanamine, 3-eptanamine, 4-eptanamine, 2-methyl-2-hexanamine, 3-methyl-2-hexanamine, 4-methyl-2-hexanamine, 5-methyl-2-hexanamine, 2-methyl-3-hexanamine, 3-methyl-3-hexanamine, 4-methyl-3-hexanamine, 5-methyl-3-hexanamine, octanamine, 2-methyl-eptanamine, 3-methyl-eptanamine, 4-methyl-eptanamine, 5-methyl-eptanamine, 6-methyl-eptanamine, 2-octanamine, 3-octanamine, 4-octanamine, 2-ethyl-hexanamine, nonanamine and 2,2,4,4-tetramethyl-pentanamine;

- secondary mono-amines of general formula (II)

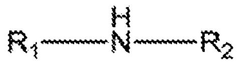

(II)

wherein $R_1$ and $R_2$, being identical or different from each other, are linear or branched, saturated or unsaturated aliphatic chains with a number of carbon atoms between 1 and 32, preferably between 1 and 18, still more preferably between 1 and 12 and still more preferably between 1 and 10, said secondary amines being preferably selected from dimethylamine, diethylamine, dipropylamine, diisopropylamine, dibutylamine, diisobutylamine, dioctylamine and bis(2-ethylhexylamine);

- di/polyamines of general formula (III)

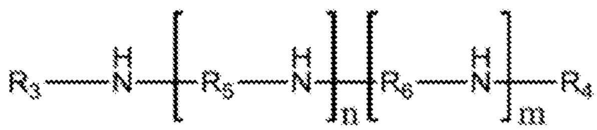

(III)

wherein $R_3$ and $R_4$, being identical or different from each other, are H or linear or branched, saturated or unsaturated aliphatic chains with a number of carbon atoms between 1 and 32, preferably between 1 and 18, still more preferably between 1 and 12 and still more preferably between 1 and 10; $R_5$ and $R_6$, being identical or different from each other, are linear or branched, saturated or unsaturated aliphatic chains with a number of carbon atoms between 1 and 32, preferably between 1 and 18, still more preferably between 1 and 12 and still more preferably between 1 and 10; n is between 0 and 10; m is between 0 and 10; m+n is between 1 and 10; said di/polyamines being preferably selected from ethylenediamine, diethylenetriamine, triethylenetetramine, tetraethylenepentamine, higher oligomers of ethylenediamine, 1,3-diaminopropane (propylenediamine), dipropylenetriamine, higher oligomers of propylenediamine 1,4-diaminobutane, 1,5-diaminopentane, 1,6-diaminohexane, (hexamethylenediamine), bis(hexamethylene)triamine), higher oligomers of hexamethylenediamine, 1,5-diamino-2-methyl-pentane, 1,3-diaminopentane, spermidine and spermine;

- cyclic aliphatic amines, preferably selected from 1,2-cyclohexanediamine, 1,3-cyclohexanediamine, 1,4-cyclohexanediamine, isophoronediamine, 3-methyl-1,2-cyclohexanediamine, 4-methyl-1,2-cyclohexanediamine, 4-methyl-1,3-cyclohexyldiamine, 2-methyl-1,3-cyclohexyldiamine, 5-methyl-1,3-cyclohexanediamine, 2-methyl-1,4-cyclohexanediamine and 1,3,5-cyclohexanetriamine, 3,3'-dimethyl-4,4'-diamino-dicyclohexylmethane and 4,4'-diamino-dicyclohexylmethane;

- aromatic amines, preferably selected from aniline, benzylamine, 1,2-diaminobenzene, 1,3-diaminobenzene, 1,4-diaminobenzene, m-phenylenebis(methylamine), 4,4'-diamino-diphenylmethane and 4-methyl-m-phenylenediamine and 2-methyl-p-phenylenediamine;

- heterocyclic amines, preferably selected from pyrrolidine, piperidine, piperazine and morpholine;

- amines with hydroxy and/or ether functional groups, preferably selected from ethanolamine, the 4,9-dioxa-1,12-dodecanediamine (CAS RN 7300-34-7) and the 4,7,10-trioxa-1,13-tridecanediamine (CAS RN 4246-51-9);

and mixtures thereof.

6. Use according to any one of claims 1 to 5, **characterized in that** said monomer (b) is selected from:

- hydroxyacids of general formula (IV)

HOOC-$R_9$-OH (IV)

wherein $R_9$ is a linear or branched saturated or unsaturated aliphatic chain with a number of carbon atoms between 1 and 31, preferably between 1 and 17, still more preferably between 1 and 11 and still more preferably between 1 and 9, said hydroxyacids being preferably selected from glycolic acid, lactic acid, 4-hydroxybutyric acid, 4-hydroxy-valeric acid, 5-hydroxy-valeric acid, 4-hydroxy-capric acid, 5-hydroxy-capric acid and 6-hydroxy-capric acid;
- a derivative in the form of lactone, preferably selected from gamma-butyrolactone, gamma-valerolactone, delta-valerolactone, gamma-caprolactone, delta-caprolactone, epsilon-caprolactone, glycolide (cyclic dimer of glycolic acid) and lactide (cyclic dimer of lactic acid):
and mixtures thereof.

**7.** Use according to claim 5, **characterized in that** said compound (a) is selected from 1-butanamine, 2-ethyl-hexanamine, 1,6-diaminohexane, 1,5-diamino-2-methyl-pentane, isomers of methyl-cyclohexyldiamine and mixtures thereof, isophoronediamine, ethanolamine, ethylenediamine, diethylenetriamine, triethylenetetramine and mixtures thereof.

**8.** Use according to any one of preceding claims, **characterized in that** said aliphatic hydroxyacid monomer (b) is a lactone.

**9.** Use according to claim 8, **characterized in that** said lactone is selected from epsilon-caprolactone (lactone of 6-hydroxycaproic acid), delta-valerolactone (lactone of 5-hydroxyvaleric acid), lactide (cyclic dimer of lactic acid), glycolide (cyclic dimer of glycolic acid) and mixtures thereof.

**10.** Use according to any one of preceding claims, **characterized in that** said polyester polymer or mixture of polyester polymer is added to the polyamide in an amount from 5 wt% to 40 wt% with respect to the total weight, more preferably from 5 wt% to 30 wt% with respect to the total weight and still more preferably from 5 wt% to 25 wt% with respect to the total weight.

**11.** Use according to any one of the preceding claims, **characterized in that** said polyamide is selected from polyamide 6, polyamide 6,6, polyamide 11, polyamide 12, polyamide 6,10, and mixtures and copolymers thereof.

**12.** A polyamide comprising a plasticizer, **characterized in that** said plasticizer comprises at least one polyester polymer as defined in any one of claims 1 to 9.

**13.** The polyamide according to claim 12, **characterized in that** said plasticizer is one or more polyester polymer as defined in any one of claims 1 to 9.

**14.** A method for plasticizing a polyamide comprising adding to said polyamide an amount effective as plasticizer of at least one polyester polymer as defined in any one of claims 1 to 9.

## Patentansprüche

**1.** Verwendung eines Polyesterpolymers, das mindestens eine Amidgruppe enthält, bestehend aus der Bindung zwischen:

- Reagenzien vom Typ (a): Verbindungen mit mindestens einer primären oder sekundären funktionellen Amingruppe und gegebenenfalls einer oder mehreren Hydroxygruppen oder einem Derivat dieser Hydroxygruppen,
- Reagenzien vom Typ (b): aliphatische Hydroxysäuremonomere mit 2 bis 32 Kohlenstoffatomen, die mindestens eine Carboxylgruppe und mindestens eine Hydroxygruppe enthalten, oder Derivate davon,

wobei das Polymer Polyesterketten aufweist, die an die mindestens eine primäre oder sekundäre funktionelle Amingruppe der Reagenzverbindung vom Typ (a) über die Amidbindung gebunden sind, wobei die Ketten einen zahlenmittleren Polymerisationsgrad zwischen 2 und 10 aufweisen,
als Weichmacher für Polyamide.

**2.** Verwendung nach Anspruch 1, **dadurch gekennzeichnet, dass** das Polymer erhalten wird aus der Reaktion zwischen:

- mindestens einer Verbindung (a), ausgewählt aus

o Ammoniak und
o einer Verbindung, die mindestens eine primäre oder sekundäre Amingruppe und gegebenenfalls eine oder mehrere Hydroxygruppen enthält, und

- mindestens einem aliphatischen Hydroxysäuremonomer (b) oder einem Derivat davon, enthaltend mindestens eine Carboxylgruppe oder ein Derivat davon und mindestens eine Hydroxygruppe oder ein Derivat davon,

unter der Bedingung, dass:

- wenn die Verbindung (a) zwei oder mehr funktionelle Gruppen aufweist, die aus primären Amingruppen und sekundären Amingruppen, und/oder eine oder mehrere Hydroxygruppen ausgewählt sind, dann weist das Monomer (b) nur eine funktionelle Carboxylgruppe auf,
- wenn die Verbindung (a) nur eine Amingruppe aufweist, dann kann das Monomer (b) eine oder mehrere funktionelle Carboxylgruppen haben, und
- das Verhältnis zwischen den Molen von (b) und der durchschnittlichen Funktionalität von (a) in Form von primären, sekundären Amingruppen und gegebenenfalls von Hydroxygruppen im Bereich von 10/1 bis 2/1 liegt.

3. Verwendung nach Anspruch 2, **dadurch gekennzeichnet, dass** das Verhältnis zwischen den Molen von (b) und der durchschnittlichen Funktionalität von (a) in Form von primären, sekundären Amingruppen und gegebenenfalls von Hydroxygruppen im Bereich von 6/1 bis 2/1 liegt.

4. Verwendung nach Anspruch 3, **dadurch gekennzeichnet, dass** das Verhältnis zwischen den Molen von (b) und der durchschnittlichen Funktionalität von (a) in Form von primären, sekundären Amingruppen und gegebenenfalls von Hydroxygruppen im Bereich von 4/1 bis 2/1 liegt.

5. Verwendung nach einem der Ansprüche 1 bis 4, **dadurch gekennzeichnet, dass** die Verbindung (a) ausgewählt ist aus:

- Ammoniak ($NH_3$)
- primären Monoaminen der allgemeinen Formel (I)

$$R\text{-}NH_2 \qquad (I)$$

wobei R eine lineare oder verzweigte gesättigte oder ungesättigte aliphatische Kette mit einer Anzahl von Kohlenstoffatomen zwischen 1 und 32, vorzugsweise zwischen 1 und 18, noch mehr bevorzugt zwischen 1 und 12 und noch mehr bevorzugt zwischen 1 und 10 ist, wobei das primäre Amine vorzugsweise ausgewählt aus Ethanamin, Propanamin, 2-Propanamin, Butanamin, 2-Methylpropanamin, 2-Butanamin, 2-Methyl-2-propanamin, Pentanamin, 2-Methylbutanamin, 3-Methylbutanamin, 2-Pentanamin, 3-Pentanamin, 2-Methyl-2-butanamin, Hexanamin, 2-Methylpentanamin, 3-Methylpentanamin, 4-Methyl-pentanamin, 2-Ethylbutanamin, 3-Ethylbutanamin, 2-Hexanamin, 3 -Hexanamin, 2-Methyl-2-Pentanamin, 3-Methyl-3-pentanamin, 3-Methyl-2-pentanamin, 4-Methyl-2-pentanamin, Eptanamin, 2-Methylhexanamin, 3-Methylhexanamin, 4-Methylhexanamin, 5-Methylhexanamin, 2-Eptanamin, 3-Eptanamin, 4-Eptanamin, 2-Methyl-2-hexanamin, 3-Methyl-2-hexanamin, 4-Methyl-2-hexanamin, 5-Methyl-2-hexanamin, 2-Methyl-3-hexanamin, 3-Methyl-3-hexanamin, 4-Methyl-3-hexanamin, 5-Methyl-3-hexanamin, Oktanamin, 2-Methyleptanamin, 3-Methyleptanamin, 4-Methyleptanamin, 5-Methyleptanamin, 6-Methyleptanamin, 2-Oktanamin, 3-Oktanamin, 4-Oktanamin, 2-Ethylhexanamin, Nonanamin und 2,2,4,4-Tetramethylpentanamin;
- sekundären Monoaminen der allgemeinen Formel (II)

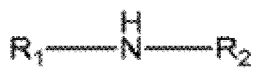
(II)

wobei $R_1$ und $R_2$, gleich oder verschieden voneinander, lineare oder verzweigte, gesättigte oder ungesättigte aliphatische Ketten mit einer Anzahl von Kohlenstoffatomen zwischen 1 und 32, vorzugsweise zwischen 1 und 18, , noch bevorzugter zwischen 1 und 12 und noch bevorzugter zwischen 1 und 10 sind, wobei die sekundären Amine vorzugsweise ausgewählt sind aus Dimethylamin, Diethylamin, Dipropylamin, Diisopropylamin, Dibutylamin, Diisobutylamin, Dioktylamin und Bis(2-ethylhexylamin);

- Di/Polyaminen der allgemeinen Formel (III)

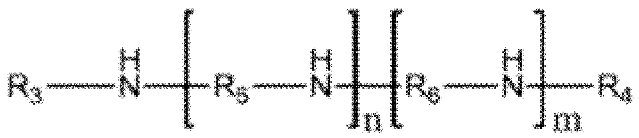

(III)

wobei $R_3$ und $R_4$, gleich oder verschieden voneinander, H oder lineare oder verzweigte, gesättigte oder ungesättigte aliphatische Ketten mit einer Anzahl von Kohlenstoffatomen zwischen 1 und 32, vorzugsweise zwischen 1 und 18, , noch mehr bevorzugt zwischen 1 und 12 und noch mehr bevorzugt zwischen 1 und 10 sind; $R_5$ und $R_6$, gleich oder verschieden voneinander, lineare oder verzweigte, gesättigte oder ungesättigte aliphatische Ketten mit einer Anzahl von Kohlenstoffatomen zwischen 1 und 32, vorzugsweise zwischen 1 und 18, noch mehr bevorzugt zwischen 1 und 12 und noch mehr bevorzugt zwischen 1 und 10 sind; n zwischen 0 und 10 ist; m zwischen 0 und 10 ist; m+n zwischen 1 und 10 ist; wobei die Di/Polyamine vorzugsweise ausgewählt sind aus Ethylendiamin, Diethylentriamin, Triethylentetramin, Tetraethylenpentamin, höheren Oligomeren von Ethylendiamin, 1,3-Diaminopropan (Propylendiamin), Dipropylentriamin, höheren Oligomeren von Propylendiamin-1,4-diaminobutan, 1,5-Diaminopentan, 1,6-Diaminohexan (Hexamethylendiamin), Bis(hexamethylen)triamin), höheren Oligomere von Hexamethylendiamin, 1,5-Diamino-2-methylpentan, 1,3-Diaminopentan, Spermidin und Spermin;

- cyclischen aliphatischen Aminen, vorzugsweise ausgewählt aus 1,2-Cyclohexandiamin, 1,3-Cyclohexandiamin, 1,4-Cyclohexandiamin, Isophorondiamin, 3-Methyl-1,2-cyclohexandiamin, 4-Methyl-1,2-cyclohexandiamin, 4-Methyl-1,3-cyclohexyldiamin, 2-Methyl-1,3-cyclohexyldiamin, 5-Methyl-1,3-cyclohexandiamin, 2-Methyl-1,4-cyclohexandiamin und 1,3,5-Cyclohexantriamin, 3,3'-Dimethyl-4,4'-diaminodicyclohexylmethan und 4,4'-Diaminodicyclohexylmethan;

- aromatischen Aminen, vorzugsweise ausgewählt aus Anilin, Benzylamin, 1,2-Diaminobenzol, 1,3-Diaminobenzol, 1,4-Diaminobenzol, m-Phenylenbis(methylamin), 4,4'-Diaminodiphenylmethan und 4-Methyl-m-Phenylendiamin und 2-Methyl-p-phenylendiamin;

- heterozyklischen Aminen, vorzugsweise ausgewählt aus Pyrrolidin, Piperidin, Piperazin und Morpholin;

- Aminen mit funktionellen Hydroxy- und/oder Ethergruppen, vorzugsweise ausgewählt aus Ethanolamin, dem 4,9-Dioxa-1,12-dodekandiamin (CAS RN 7300-34-7) und dem 4,7,10-Trioxa-1,13-tridekandiamin (CAS RN 4246-51-9); und Mischungen davon.

**6.** Verwendung nach einem der Ansprüche 1 bis 5, **dadurch gekennzeichnet, dass** das Monomer (b) ausgewählt ist aus:

- Hydroxysäuren der allgemeinen Formel (IV)

$$HOOC\text{-}R_9\text{-}OH \qquad (IV)$$

wobei $R_9$ eine lineare oder verzweigte gesättigte oder ungesättigte aliphatische Kette mit einer Anzahl von Kohlenstoffatomen zwischen 1 und 31, vorzugsweise zwischen 1 und 17, noch mehr bevorzugt zwischen 1 und 11 und noch mehr bevorzugt zwischen 1 und 9 ist, wobei die Hydroxysäuren vorzugsweise ausgewählt sind aus Glykolsäure, Milchsäure, 4-Hydroxybuttersäure, 4-Hydroxyvaleriansäure, 5-Hydroxyvaleriansäure, 4-Hydroxycaprinsäure, 5-Hydroxycaprinsäure und 6-Hydroxycaprinsäure;

- einem Derivat in Form von Lacton, vorzugsweise ausgewählt aus Gamma-Butyrolacton, Gamma-Valerolacton, Delta-Valerolacton, Gamma-Caprolacton, Delta-Caprolacton, Epsilon-Caprolacton, Glycolid (zyklisches Dimer von Glykolsäure) und Lactid (zyklisches Dimer von Milchsäure) und Mischungen davon.

**7.** Verwendung nach Anspruch 5, **dadurch gekennzeichnet, dass** die Verbindung (a) ausgewählt ist aus 1-Butanamin, 2-Ethylhexanamin, 1,6-Diaminohexan, 1,5-Diamino-2-methylpentan und Isomeren von Methylcyclohexyldiamin und Mischungen davon, Isophorondiamin, Ethanolamin, Ethylendiamin, Diethylentriamin, Triethylentetramin und Mischungen davon.

**8.** Verwendung nach einem der vorhergehenden Ansprüche, **dadurch gekennzeichnet, dass** das aliphatische Hydroxysäuremonomer (b) ein Lacton ist.

**9.** Verwendung nach Anspruch 8, **dadurch gekennzeichnet, dass** das Lacton ausgewählt ist aus Epsilon-Caprolacton (Lacton der 6-Hydroxycapronsäure), Delta-Valerolacton (Lacton der 5-Hydroxyvaleriansäure), Lactid (zyklisches Dimer der Milchsäure), Glycolid (zyklisches Dimer der Glykolsäure) und Mischungen davon.

**10.** Verwendung nach einem der vorhergehenden Ansprüche, **dadurch gekennzeichnet, dass** das Polyesterpolymer oder die Polyesterpolymermischung dem Polyamid in einer Menge von 5 Gew.-% bis 40 Gew.-% bezogen auf das Gesamtgewicht, besonders bevorzugt von 5 Gew.-% bis 30 Gew.-% bezogen auf das Gesamtgewicht und noch bevorzugter von 5 Gew.-% bis 25 Gew.-% bezogen auf das Gesamtgewicht zugesetzt wird.

**11.** Verwendung nach einem der vorhergehenden Ansprüche, **dadurch gekennzeichnet, dass** das Polyamid ausgewählt ist aus Polyamid-6, Polyamid-6,6, Polyamid-11, Polyamid-12, Polyamid-6,10 und Mischungen und Copolymeren davon.

**12.** Ein Polyamid, das einen Weichmacher umfasst, **dadurch gekennzeichnet, dass** der Weichmacher mindestens ein Polyesterpolymer gemäß einem der Ansprüche 1 bis 9 umfasst.

**13.** Polyamid nach Anspruch 12, **dadurch gekennzeichnet, dass** der Weichmacher ein oder mehrere Polyesterpolymere gemäß einem der Ansprüche 1 bis 9 ist.

**14.** Ein Verfahren zum Weichmachen eines Polyamids, umfassend die Zugabe einer als Weichmacher wirksamen Menge mindestens eines Polyesterpolymers nach einem der Ansprüche 1 bis 9 zu dem Polyamid.

**Revendications**

**1.** Utilisation d'un polymère de polyester contenant au moins un groupe amide constitué de la liaison entre les éléments suivants :

- des réactifs de type (a) : composés présentant au moins un groupe fonctionnel amine primaire ou secondaire et éventuellement un ou plusieurs groupes hydroxy ou un dérivé desdits groupes hydroxy,
- des réactifs de type (b) : monomères hydroxyacides aliphatiques ayant de 2 à 32 atomes de carbone, contenant au moins un groupe carboxylique et au moins un groupe hydroxy, ou leurs dérivés,

ledit polymère ayant des chaînes de polyester liées audit au moins un groupe fonctionnel amine primaire ou secondaire du composé réactif de type (a) par l'intermédiaire de ladite liaison amide, et lesdites chaînes ayant un degré de polymérisation moyen en nombre compris entre 2 et 10,
comme plastifiant pour des polyamides.

**2.** Utilisation selon la revendication 1, **caractérisée en ce que** ledit polymère est obtenu à partir de la réaction entre :

- au moins un composé (a) choisi parmi
  - l'ammoniac et
  - un composé contenant au moins un groupe amine primaire ou secondaire et contenant éventuellement un ou plusieurs groupes hydroxy, et
- au moins un monomère hydroxyacide aliphatique (b), ou un dérivé de celui-ci, contenant au moins un groupe carboxylique ou un dérivé de celui-ci et au moins un groupe hydroxy ou un dérivé de celui-ci,

pourvu que :

- si le composé (a) a deux ou plusieurs groupes fonctionnels choisis parmi les groupes amines primaires et les groupes amines secondaires, et/ou un ou plusieurs groupes hydroxy, alors le monomère (b) ne possède qu'un seul groupe fonctionnel carboxylique,
- si le composé (a) n'a qu'un seul groupe amine, alors le monomère (b) peut avoir un ou plusieurs groupes fonctionnels carboxyliques, et
- le rapport entre les moles de (b) et la fonctionnalité moyenne de (a) en termes de groupes primaires, secondaires, amines et éventuellement de groupes hydroxy, compris entre 10/1 et 2/1.

3. Utilisation selon la revendication 2, **caractérisée en ce que** le rapport entre les moles de (b) et la fonctionnalité moyenne de (a) en termes de groupes primaires, secondaires, amines et éventuellement de groupes hydroxy, est compris entre 6/1 et 2/1.

4. Utilisation selon la revendication 3, **caractérisée en ce que** le rapport entre les moles de (b) et la fonctionnalité moyenne de (a) en termes de groupes primaires, secondaires, amines et éventuellement de groupes hydroxy, est compris entre 4/1 et 2/1.

5. Utilisation selon l'une quelconque des revendications 1 à 4, **caractérisée en ce que** ledit composé (a) est choisi parmi les éléments suivants :

- l'ammonia ($NH_3$)
- les mono-amines primaires de formule générale (I)

$$R\text{-}NH_2 \qquad (I)$$

où R représente une chaîne aliphatique saturée ou insaturée, linéaire ou ramifiée, dont le nombre d'atomes de carbone est compris entre 1 et 32, de préférence entre 1 et 18, encore plus préférentiellement entre 1 et 12 et encore plus préférentiellement entre 1 et 10, lesdites amines primaires étant de préférence choisies parmi l'éthanamine, la propanamine, la 2-propanamine, la butanamine, la 2-méthyl-propanamine, la 2-butanamine, la 2-méthyl-2-propanamine, la pentanamine, la 2-méthyl-butanamine, la 3-méthyl-butanamine, la 2-pentanamine, la 3-pentanamine, la 2-méthyl-2-butanamine, l'hexanamine, la 2-méthyl-pentanamine, la 3-méthyl-pentanamine, la 4-méthyl-pentanamine, la 2-éthyl-butanamine, la 3-éthyl-butanamine, la 2-hexanamine, la 3-hexanamine, la 2-méthyl-2-pentanamine, la 3-méthyl-3-pentanamine, la 3-méthyl-2-pentanamine, la 4-méthyl-2-pentanamine, l'eptanamine, la 2-méthyl-hexanamine, la 3-méthyl-hexanamine, la 4-méthyl-hexanamine, la 5-méthyl-hexanamine, la 2-eptanamine, la 3-eptanamine, la 4-eptanamine, la 2-méthyl-2-hexanamine, la 3-méthyl-2-hexanamine, la 4-méthyl-2-hexanamine, la 5-méthyl-2-hexanamine, la 2-méthyl-3-hexanamine, la 3-méthyl-3-hexanamine, la 4-méthyl-3-hexanamine, la 5-méthyl-3-hexanamine, l'octanamine, la 2-méthyl-eptanamine, la 3-méthyl-eptanamine, la 4-méthyl-eptanamine, la 5-méthyl-eptanamine, la 6-méthyl-eptanamine, la 2-octanamine, la 3-octanamine, la 4-octanamine, la 2-éthyl-hexanamine, la nonanamine et la 2,2,4,4-tétraméthyl-pentanamine ;
- les mono-amines secondaires de formule générale (II)

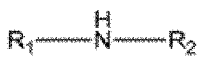
(II)

où $R_1$ et $R_2$, identiques ou différents l'un de l'autre, sont des chaînes aliphatiques saturées ou insaturées, linéaires ou ramifiées, dont le nombre d'atomes de carbone est compris entre 1 et 32, de préférence entre 1 et 18, de préférence encore entre 1 et 12 et de préférence encore entre 1 et 10, lesdites amines secondaires étant de préférence choisies parmi la diméthylamine, la diéthylamine, la dipropylamine, la diisopropylamine, la dibutylamine, la diisobutylamine, la dioctylamine et la bis(2-éthyl-hexylamine) ;
- les di/polyamines de formule générale (III)

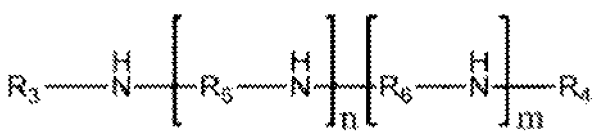
(III)

où $R_3$ et $R_4$, identiques ou différents l'un de l'autre, sont H ou des chaînes aliphatiques saturées ou insaturées, linéaires ou ramifiées, dont le nombre d'atomes de carbone est compris entre 1 et 32, de préférence entre 1 et 18, de préférence encore entre 1 et 12 et de préférence encore entre 1 et 10 ; $R_5$ et $R_6$, identiques ou différents l'un de l'autre, sont des chaînes aliphatiques saturées ou insaturées, linéaires ou ramifiées, dont le nombre d'atomes de carbone est compris entre 1 et 32, de préférence entre 1 et 18, de préférence encore entre 1 et 12 et de préférence encore entre 1 et 10 ; n est compris entre 0 et 10 ; m est compris entre 0 et 10 ; m+n est compris entre 1 et 10 ; lesdites di/polyamines étant de préférence choisies parmi l'éthylènediamine, la diéthylènétriamine, la triéthylènetétramine, la tétraéthylènepentamine, les oligomères supérieurs de l'éthylènediamine, le 1,3-diaminopropane (propylènediamine), la dipropylènétriamine, les oligomères supérieurs de la propylènediamine, le 1,4-diaminobutane, le 1,5-diaminopentane, le 1,6-diaminohexane, le (hexaméthylènediamine), le bis(hexaméthylène)triamine), les oligomères supérieurs de l'hexaméthylènediamine, le 1,5-diamino-2-méthylpentane, le 1,3-diaminopentane, la spermidine et la spermine ;
- les amines aliphatiques cycliques, de préférence choisies parmi la 1,2-cyclohexanediamine, la 1,3-cyclohexanediamine, la 1,4-cyclohexanediamine, l'isophoronediamine, la 3-méthyl-1,2-cyclohexanediamine, la 4-méthyl-1,2-cyclohexanediamine, la 4-méthyl-1,3-cyclohexyldiamine, la 2-méthyl-1,3-cyclohexyldiamine, la 5-méthyl-1,3-cyclohexanediamine, la 2-méthyl-1,4-cyclohexanediamine et la 1,3,5-cyclohexanetriamine, le 3,3'-diméthyl-4,4'-diamino-dicyclohexylméthane et le 4,4'-diamino-dicyclohexylméthane ;
- les amines aromatiques, de préférence choisies parmi l'aniline, la benzylamine, le 1,2-diaminobenzène, le 1,3-diaminobenzène, le 1,4-diaminobenzène, le m-phénylènebis(méthylamine), le 4,4'-diamino-diphénylméthane et le 4-méthyl-m-phénylènediamine et le 2-méthyl-p-phénylènediamine ;
- les amines hétérocycliques, de préférence choisies parmi la pyrrolidine, la pipéridine, la pipérazine et la morpholine ;
- les amines avec des groupes fonctionnels hydroxy et/ou éther, de préférence choisies parmi l'éthanolamine, la 4,9-dioxa-1,12-dodécanediamine (CAS RN 7300-34-7) et la 4,7,10-trioxa-1,13-tridécanediamine (CAS RN 4246-51-9) ; et leurs mélanges.

6. Utilisation selon l'une quelconque des revendications 1 à 5, **caractérisée en ce que** ledit monomère (b) est choisi parmi les éléments suivants :

- les hydroxyacides de formule générale (IV)

$$HOOC\text{-}R_9\text{-}OH \qquad (IV)$$

où $R_9$ est une chaîne aliphatique saturée ou insaturée, linéaire ou ramifiée, dont le nombre d'atomes de carbone est compris entre 1 et 31, de préférence entre 1 et 17, de préférence encore entre 1 et 11 et de préférence encore entre 1 et 9, lesdits hydroxyacides étant de préférence choisis parmi l'acide glycolique, l'acide lactique, l'acide 4-hydroxy-butyrique, l'acide 4-hydroxy-valérique, l'acide 5-hydroxy-valérique, l'acide 4-hydroxy-caprique, l'acide 5-hydroxy-caprique et l'acide 6-hydroxy-caprique ;
- un dérivé sous forme de lactone, de préférence choisi parmi le gamma-butyrolactone, le gamma-valérolactone, le delta-valérolactone, le gamma-caprolactone, le delta-caprolactone, l'epsilon-caprolactone, le glycolide (dimère cyclique de l'acide glycolique) et le lactide (dimère cyclique de l'acide lactique) :
et leurs mélanges.

7. Utilisation selon la revendication 5, **caractérisée en ce que** ledit composé (a) est choisi parmi la 1-butanamine, la 2-éthyl-hexanamine, le 1,6-diaminohexane, le 1,5-diamino-2-méthyl-pentane, les isomères de la méthyl-cyclohexyldiamine et leurs mélanges, l'isophoronediamine, l'éthanolamine, l'éthylènediamine, la diéthylènétriamine, la triéthylènetétramine et leurs mélanges.

8. Utilisation selon l'une quelconque des revendications précédentes, **caractérisée en ce que** ledit monomère hydroxyacide aliphatique (b) est une lactone.

9. Utilisation selon la revendication 8, **caractérisée en ce que** ladite lactone est choisie parmi l'epsilon-caprolactone (lactone de l'acide 6-hydroxycaproïque), la delta-valérolactone (lactone de l'acide 5-hydroxyvalérique), le lactide (dimère cyclique de l'acide lactique), le glycolide (dimère cyclique de l'acide glycolique) et leurs mélanges.

10. Utilisation selon l'une quelconque des revendications précédentes, **caractérisée en ce que** ledit polymère de polyester ou mélange de polymère de polyester est ajouté au polyamide en une quantité allant de 5 % en poids à 40 % en poids par rapport au poids total, plus préférentiellement de 5 % en poids à 30 % en poids par rapport au poids total et encore plus préférentiellement de 5 % en poids à 25 % en poids par rapport au poids total.

11. Utilisation selon l'une quelconque des revendications précédentes, **caractérisée en ce que** ledit polyamide est choisi parmi le polyamide 6, le polyamide 6,6, le polyamide 11, le polyamide 12, le polyamide 6,10, et leurs mélanges et copolymères.

12. Polyamide comprenant un plastifiant, **caractérisé en ce que** ledit plastifiant comprend au moins un polymère de

polyester tel que défini dans l'une quelconque des revendications 1 à 9.

**13.** Polyamide selon la revendication 12, **caractérisé en ce que** ledit plastifiant est un ou plusieurs polymères de polyester tels que définis dans l'une quelconque des revendications 1 à 9.

**14.** Procédé de plastification d'un polyamide comprenant l'addition audit polyamide d'une quantité efficace en tant que plastifiant d'au moins un polymère de polyester tel que défini dans l'une quelconque des revendications 1 à 9.

Figure 1

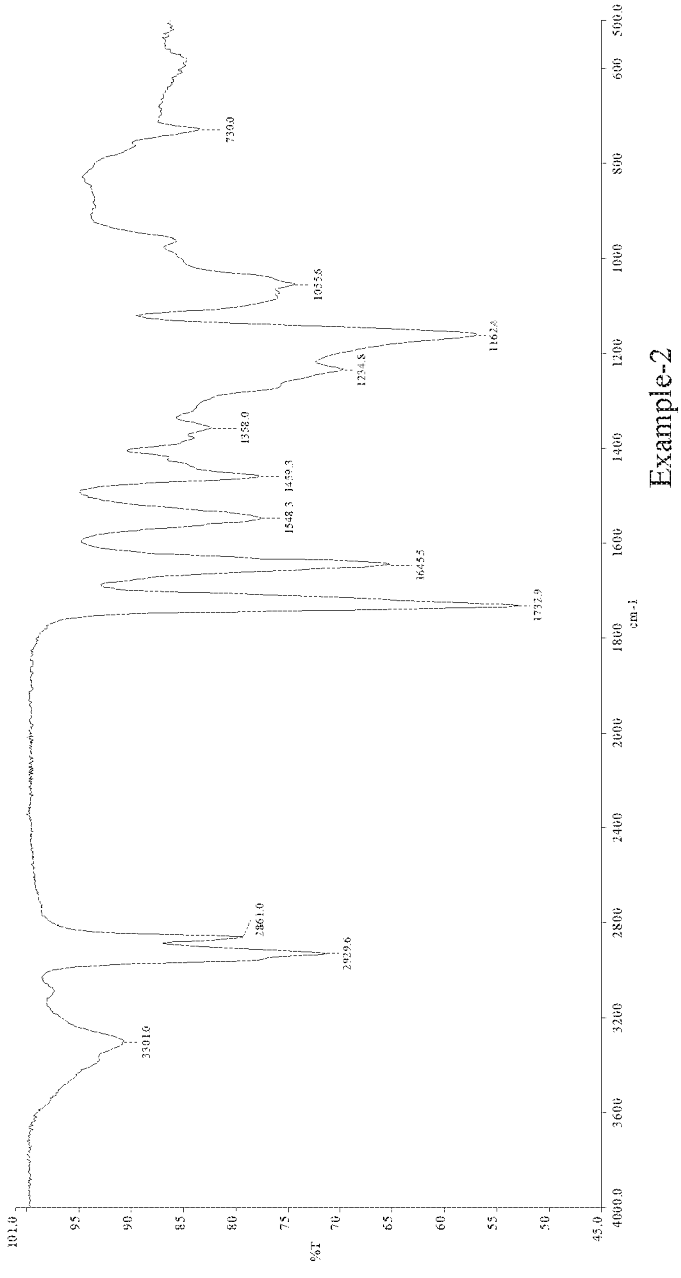
Example-2
%T
cm-1
101.0
95
90
85
80
75
70
65
60
55
50
45.0
4000.0
3600
3200
2800
2400
2000
1800
1600
1400
1200
1000
800
600
500.0
3301.6
2929.6
2861.0
1732.9
1645.5
1548.3
1459.3
1358.0
1234.8
1162.3
1055.6
730.0

Figure 2

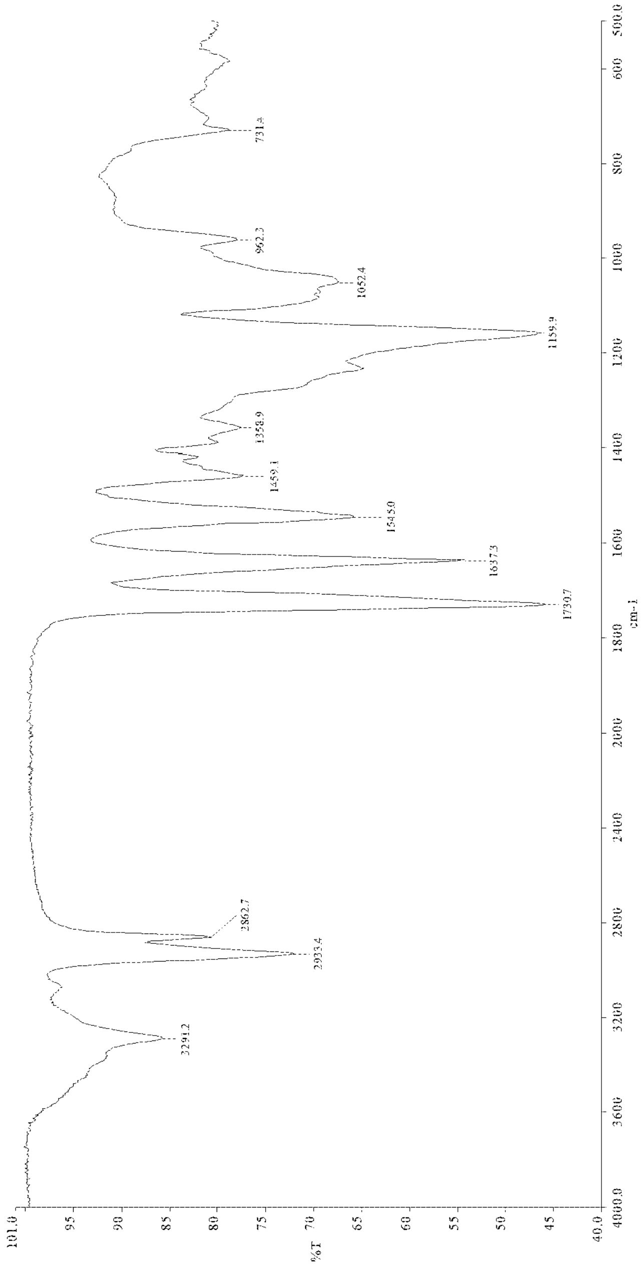


Example-3

Figure 3

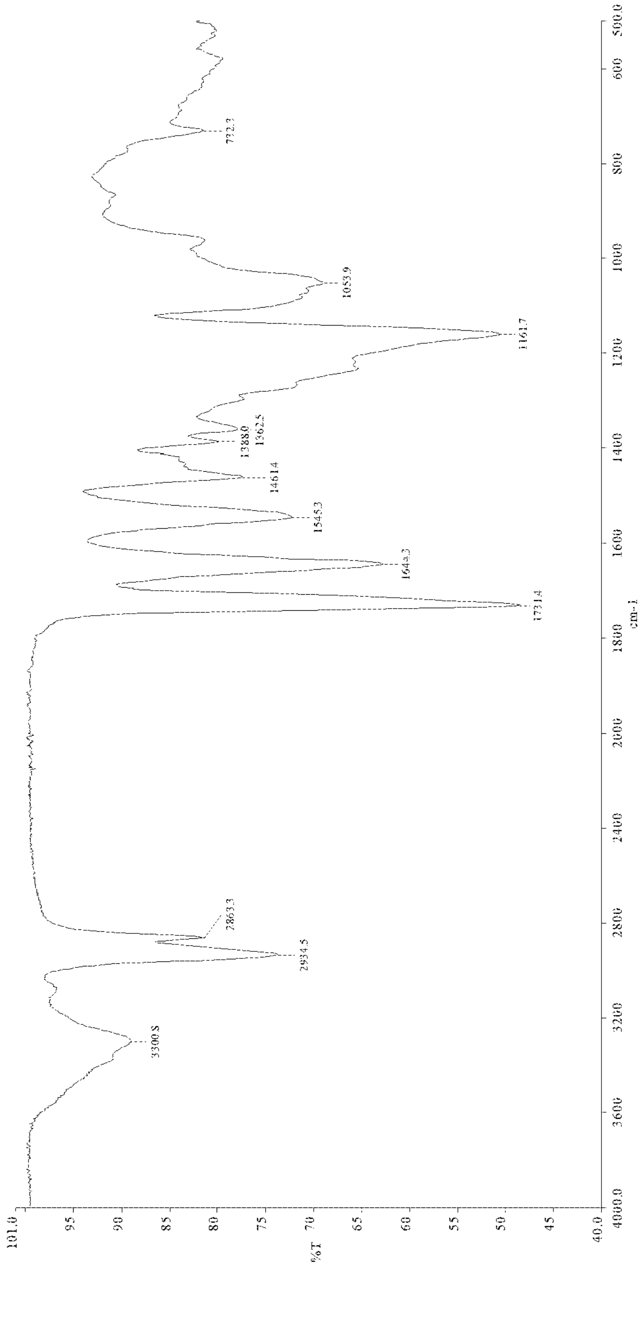


Example-6

Figure 4

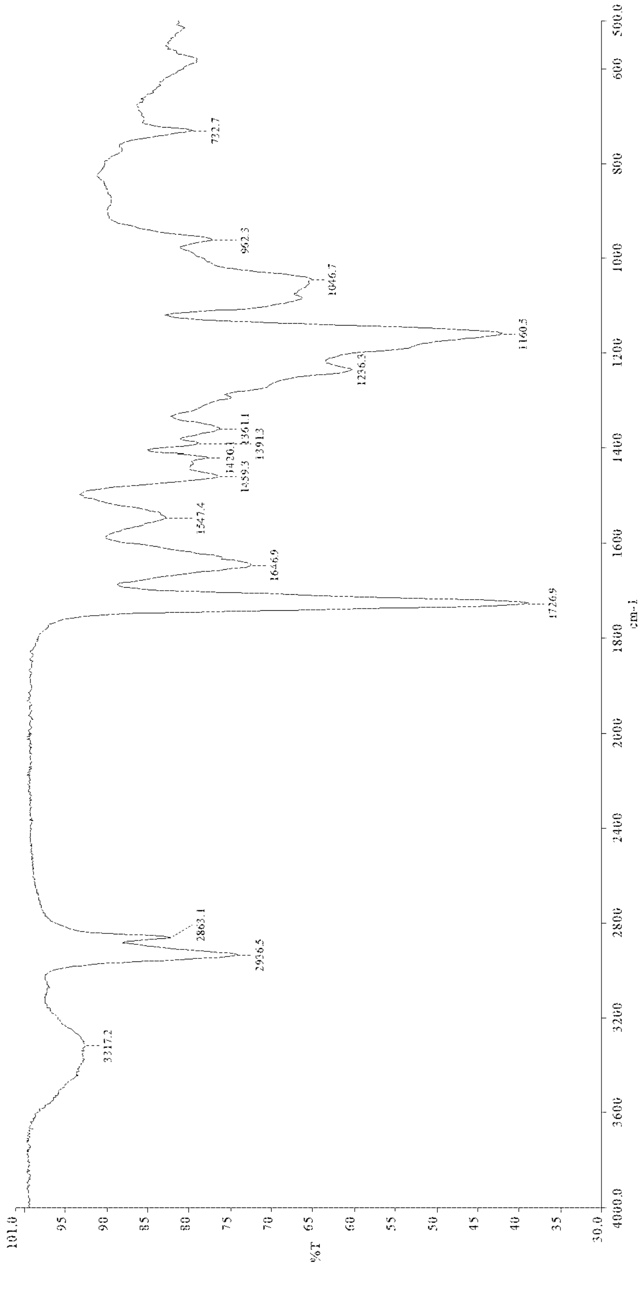


Example-7

Figure 5

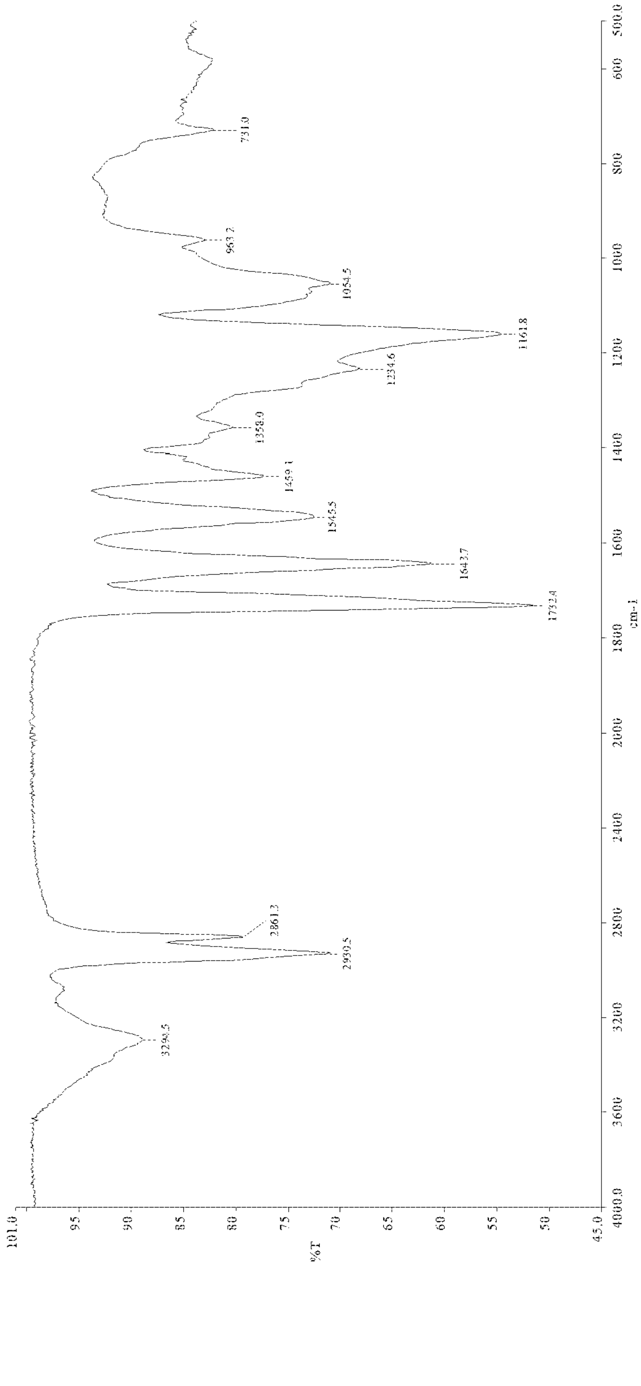


Example-9

Figure 6

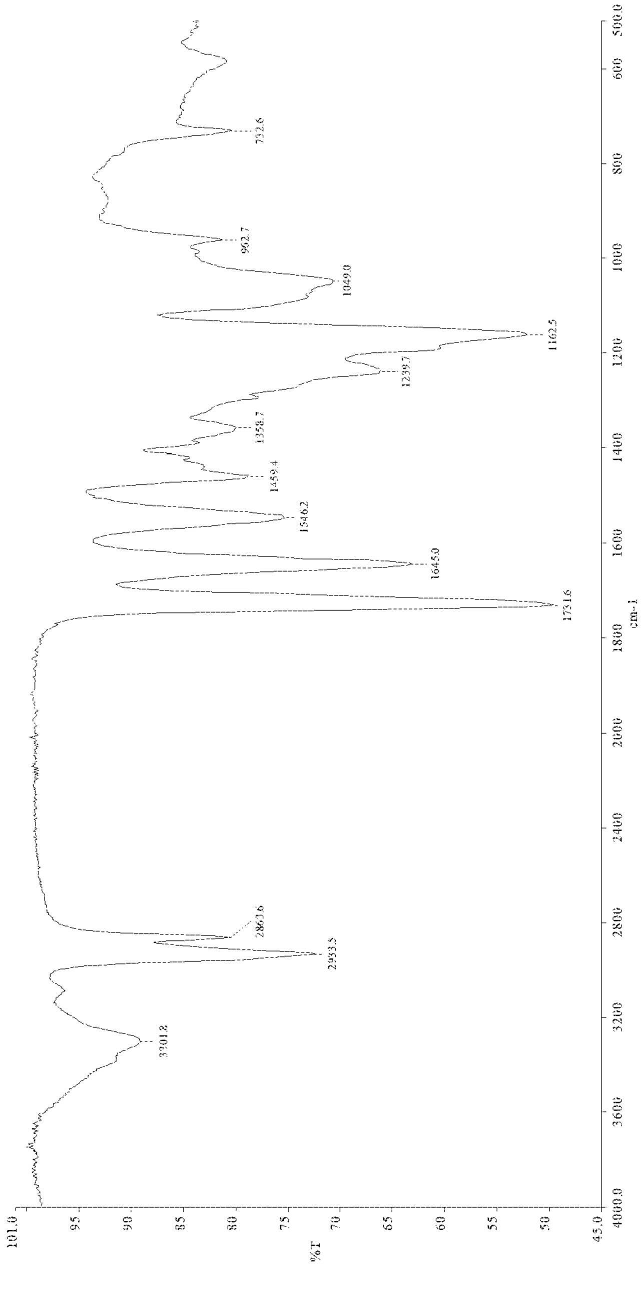


Example-13

Figure 7

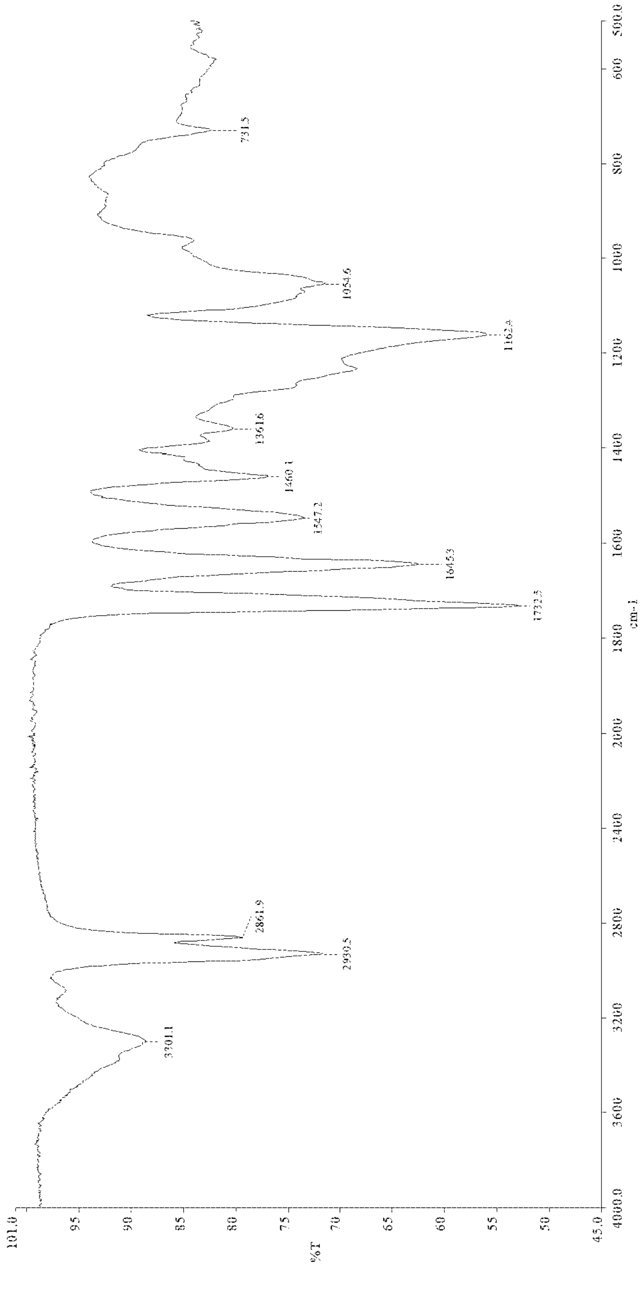


Example-14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018318470 A